(19) Europäisches Patentamt
European Patent Office
Office européen des brevets

(11) **EP 2 869 219 A1**

(12) **EUROPEAN PATENT APPLICATION**

(43) Date of publication:
**06.05.2015 Bulletin 2015/19**

(51) Int Cl.:
***G06F 17/30*** *(2006.01)* ***G06F 17/22*** *(2006.01)*

(21) Application number: **14180982.2**

(22) Date of filing: **14.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.10.2013 JP 2013227557**

(71) Applicants:
• **Kabushiki Kaisha Toshiba**
**Tokyo 105-8001 (JP)**
• **Toshiba Solutions Corporation**
**Kawasaki-shi,**
**Kanagawa 212-8585 (JP)**

(72) Inventors:
• **Hamada, Shinichiro**
**Kanagawa, 212-8585 (JP)**
• **Shimizu, Ayumu**
**Kanagawa, 212-8585 (JP)**
• **Kano, Toshiyuki**
**Kanagawa, 212-8585 (JP)**
• **Tanaka, Shiro**
**Kanagawa, 212-8585 (JP)**
• **Tada, Tomoari**
**Kanagawa, 212-8585 (JP)**

(74) Representative: **Hoffmann Eitle**
**Patent- und Rechtsanwälte PartmbB**
**Arabellastraße 30**
**81925 München (DE)**

(54) **Text processing apparatus, text processing method, and computer program product**

(57)    According to an embodiment, a text processing apparatus includes a generator and a list display unit. The generator is configured to generate topic structure information by analyzing input text. The topic structure information includes information that represents a subordinate relation between a plurality of topics included in the text and information that represents a relative positional relation between the topics included in the text.

The list display unit is configured to display, on a display, a topic structure list in which a plurality of nodes each corresponding to a topic included in the text and each including a label that represents a subordinate relation between a topic corresponding to each node and another topic are arranged based on the topic structure information in accordance with a relative positional relation between topics corresponding to the respective nodes.

FIG.3

**Description**

CROSS-REFERENCE TO RELATED APPLICATION

This application is based upon and claims the benefit of priority from Japanese Patent Application No. 2013-227557, filed on October 31, 2013; the entire contents of which are incorporated herein by reference.

FIELD

Embodiments described herein relate generally to a text processing apparatus, a text processing method, and a computer program product.

BACKGROUND

Conventionally, as a technology enabling an explorative access to a text, it is known to process a text using software called an outliner. The outliner is a general term of software that displays the skeleton structure of a text and, when a user further selects an arbitrary element of the structure, is capable of opening a corresponding part of the text.
However, in a conventional outliner, generally, a logical structure such as a chapter and a section given for a text in advance is treated as the skeleton structure of the text. Accordingly, it is difficult to perform a process for a text that does not have a logical structure, and the improvement thereof is requested.

BRIEF DESCRIPTION OF THE DRAWINGS

FIG. 1 illustrates examples of the screen configurations of display screens displayed on a display as outputs of a text processing apparatus;
FIG. 2A is a diagram that illustrates a sample text;
FIG. 2B is a diagram that illustrates a sample text;
FIG. 3 is a block diagram that illustrates the whole configuration of a text processing apparatus;
FIG. 4 is a diagram that illustrates an example of a topic structure model;
FIG. 5 is a flowchart that illustrates an example of the processing procedure of a topic structure model generator;
FIG. 6 is a diagram that illustrates the initial state of a topic structure list generated based on a topic structure model;
FIG. 7 is a flowchart that illustrates an example of the processing procedure of an initial state generator;
FIG. 8 is a flowchart that illustrates an example of the processing procedure of a topic structure operating unit in a case where an opening operation is performed for an arbitrary GUI node;
FIG. 9 is a flowchart that illustrates an example of the processing procedure of a topic structure operating unit in a case where a closing operation of an arbitrary GUI node is performed;
FIG. 10 illustrates an example of the screen transition of an outliner window in a case where an opening/closing operation of a GUI node is performed;
FIG. 11 is a flowchart that illustrates an example of the processing procedure of a summary requesting unit;
FIG. 12 is a diagram that summaries an operation method for changing the summarizing rate of a text displayed on a body window;
FIG. 13 is a flowchart that illustrates an example of the processing procedure of an application range adjusting unit in a case where the adjustment of an application range is performed based on a dense-first algorithm;
FIG. 14 is a flowchart that illustrates an example of the processing procedure of an application range adjusting unit in a case where the adjustment of an application range is performed based on a weighted synthesis algorithm;
FIG. 15 is a flowchart that illustrates an example of the processing procedure of an important sentence selector in a case where a sentence deleting process is performed;
FIG. 16 is a flowchart that illustrates an example of the processing procedure of an important sentence selector in a case where a sentence adding process is performed;
FIG. 17 is a flowchart that illustrates an example of the processing procedure of an important sentence selector in a case where the score of a sentence is calculated;
FIG. 18 is a flowchart that illustrates a modified example of the processing procedure of the topic structure model generator; and
FIG. 19 is a diagram that illustrates the hardware configuration of a text processing apparatus.

DETAILED DESCRIPTION

According to an embodiment, a text processing apparatus includes a generator and a list display unit. The generator is configured to generate topic structure information by analyzing input text. The topic structure information includes information that represents a subordinate relation between topics included in the text and information that represents a relative positional relation between the topics included in the text. The list display unit is configured to display, on a display, a topic structure list in which a plurality of nodes each corresponding to a topic included in the text and each including a label that represents a subordinate relation between a topic corresponding to each node and another topic are arranged based on the topic structure information in accordance with a relative positional relation between topics corresponding to the respective nodes.

Hereinafter, a text processing apparatus, a text processing method, and a program according to the embodiment will be described in detail with reference to the drawings. The embodiment described below is mainly an example having a text in which a call reception in a call center, the progress of a conference, or the like is recorded as a processing target.

In call receptions performed in a call center, there are cases where call receptions for the same customer are made over a plurality of number of times. In such a case, while an operator responding to the same customer is not limited to being the same all the time, there are cases where a customer makes an inquiry based on the context of the content of phone calls until now such as an inquiry of "About milk allergy that you talked before, and · · ·". In such cases, the call center side is requested to appropriately respond also to such an inquiry from the viewpoint of customer satisfaction. Accordingly, it is necessary for an operator responding to a customer to understand the content of receptions until now.

As an example similar to such a situation, for example, there is a conference such as a regular development conference of a company that is held over a plurality of number of times. In a conference of the second time and subsequent times, a discussion is frequently developed based on the content of discussions exchanged at the conference up to the previous time. However, there are cases where a person who does not participate in a conference until now or a person who participates in a conference but cannot clearly remember the content of the discussions thereof, or the like attends the conference. In order to save such a person, likewise, it is necessary to allow such a person to understand the content of discussions exchanged in the conference until now.

For such an object, an approach may be considered in which past exchange of messages are configured and recorded as texts (hereinafter, this recording will be referred to as a past log), and the past log is presented so as to allow an operator or a conference participant to read it at any time during a phone call reception performed in a call center or a conference. In such a case, it is preferable that the past log is configured such that an operator or a conference participant can quickly understand necessary points so as not to disturb the phone call reception or the progress of the conference.

However, important parts depend on the development of the phone call reception or the progress of the conference or the knowledge of an operator or a conference participant who is in need of information, and accordingly, necessary points cannot be predicted in advance. Therefore, a mechanism is requested which enables the operator or the conference participant who is in need of the information to quickly find out a necessary point among the past log and quickly understand the content.

In this embodiment, a solving method employing an outliner that uses a topic structure of a text will be presented. The outliner is a general term of software that displays the skeleton structure of a text and in addition, when a user selects an arbitrary element of the structure, can open a corresponding part. Examples of existing software include OmniOutliner and Microsoft(R) Word. However, such an outliner performs the process for a text based on a logical structure such as a chapter and a section given to the text in advance. In contrast to this, processing targets of the embodiment are exchange of messages between persons in a call center or a conference, which is configured as a text, which has no logical structures such as chapters and sections given in advance. Instead of the logical structure, a topic structure of a text is used.

The topic structure is not visible. In this embodiment, the inventor(s) proposes a text processing apparatus that includes a topic structure model configured based on a subordinate relation and the context between topics detected based on a hypothesis and an outliner using this topic structure model.

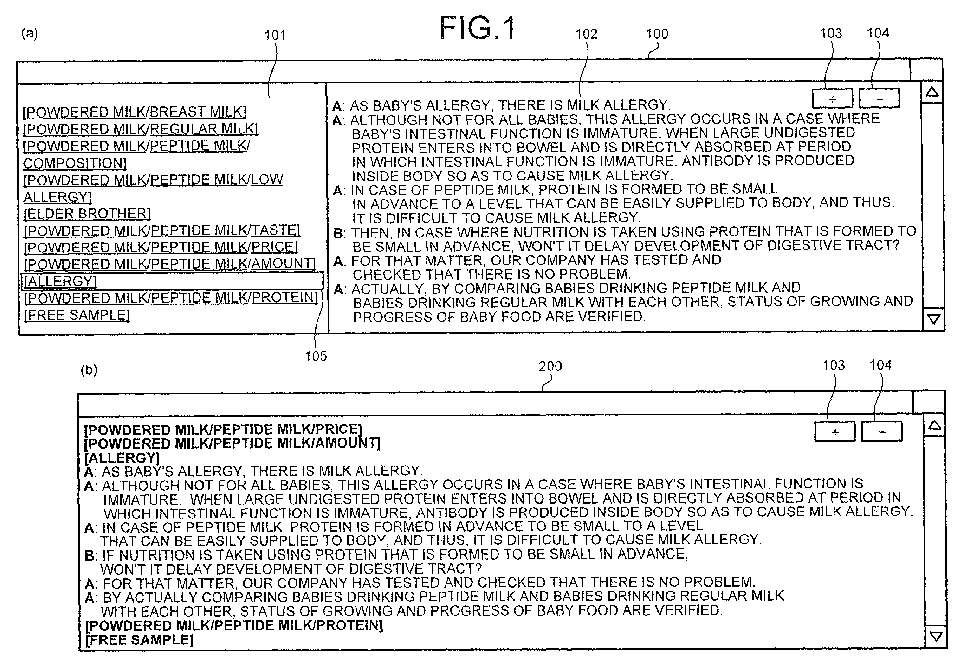

First, an example of the display screen displayed on a display as an output of the text processing apparatus according to this embodiment will be described with reference to (a) and (b) in FIG. 1.

FIG. 1 illustrates examples of the screen configurations of display screens displayed on a display as outputs of the text processing apparatus according to this embodiment. A display screen 100 illustrated in (a) in FIG. 1 is configured by an outliner window 101 and a body window 102. The outliner window 101 displays a topic structure list that represents a topic structure of an input text and provides a further interactive operation for explorative accessing to the body of the text. The body window 102 displays the body of the input text. By using this body window 102, the summary of the text can be displayed.

For example, as illustrated in (a) in FIG. 1, when any one of item groups (hereinafter, each of such items is referred to as a GUI node) of the topic structure list displayed in the outliner window 101 by representing the topic structure of the text is selected, the body of the text relating to the topic represented in the selected GUI node (105 illustrated in (a) in FIG. 1) is displayed in the body window 102. At this time, when the sentence amount of the body of the text relating to the topic represented in the GUI node is larger than the size of the body window 102, the body of the text is summarized to be displayed in the body window 102. The body window 102 illustrated in (a) in FIG. 1 represents an example in which a summarized text acquired by removing unimportant sentences from among sentences relating to "allergy" of the input text is displayed. In addition, the summarizing rate of the text displayed in the body window 102, for example, may be changed by operating a "+" button 103 or a "-" button 104, which is disposed on the upper right side of the body window 102, or operating a mouse wheel or the like.

The display screen 100 illustrated in (a) in FIG. 1 is assumed to use a display of a size capable of simultaneously displaying two windows including the outliner window 101 and the body window 102. However, for example, there are also cases where a small-size display capable of securing only one window area due to a small screen size, like a display of a mobile terminal, is used. In such cases, like a display screen 200 illustrated in (b) in FIG. 1 as an example, it may be considered to employ a screen configuration in which a body of a text is displayed to be in-line between GUI nodes of the topic structure list. However, hereinafter, the description will be continued with the example of the screen configuration of the display screen 100 illustrated in (a) in FIG. 1 as an example being assumed to be employed.

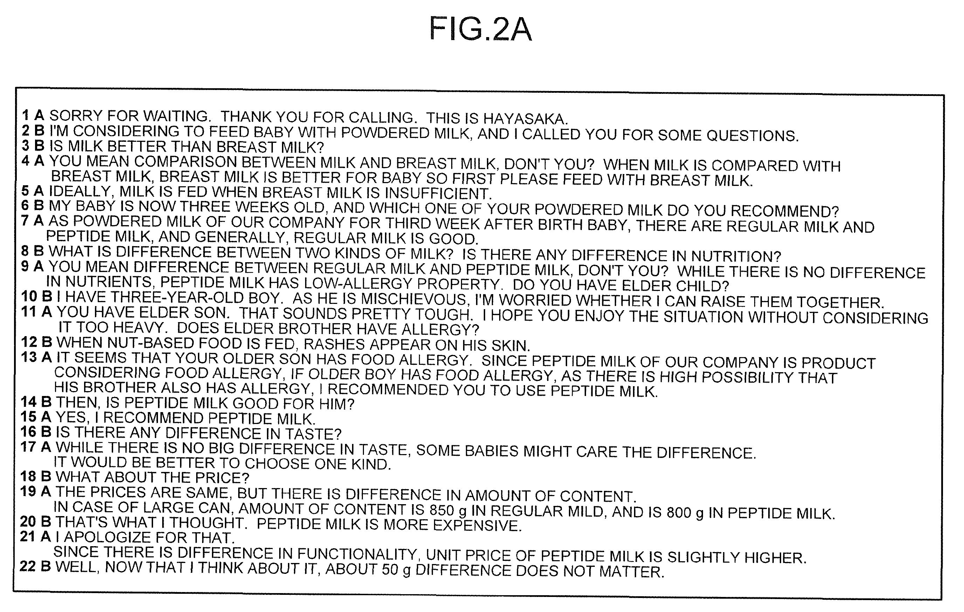

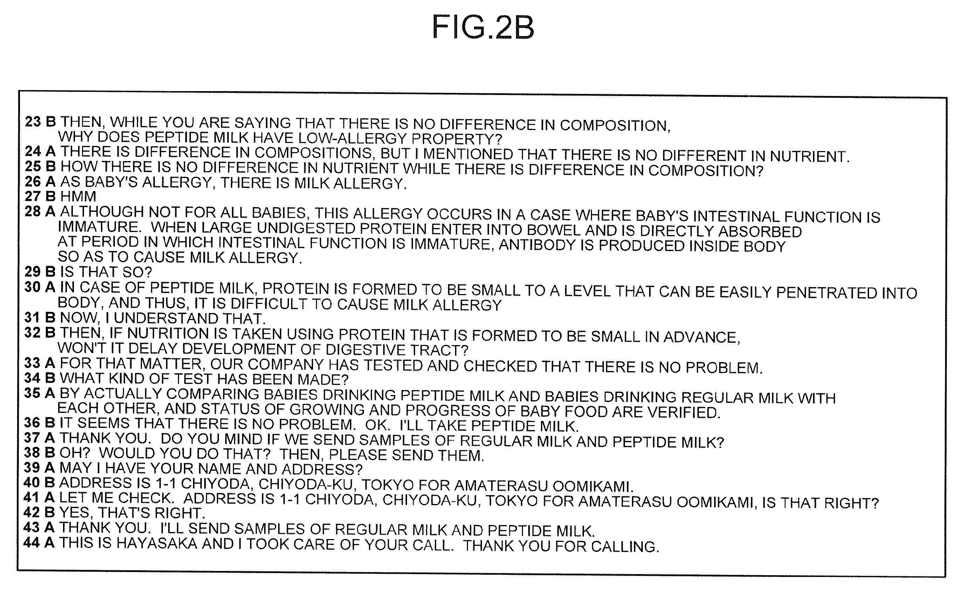

FIGS. 2A and 2B are diagrams that illustrate sample texts used as input examples of this embodiment. These sample texts have exchanges between an operator and a customer in a call center as materials. Numbers represented at the left end of the figure are row numbers that represent the sequence in which sentences appear. In these examples of the sample texts, a text range that is recognized as a set of speech made by an operator or a customer is set as one row, and it is represented that a conversation is continued in the sequence of row numbers 1 to 44. However, the definition of a row of a text is not limited to these examples. For example, in the case of a text having paragraph delimiters, a text range included in one paragraph may be set as one row. On the other hand, in the case of a text including a mark that represents the end of each row, a text range delimited by the mark may be set as one row.

In addition, in the sample texts illustrated in FIGS. 2A and 2B, "A" or "B" attached to the right side of each row number represents a speaking person, "A" represents the speech of the operator, and "B" represents the speech of the customer. Hereinafter, the text processing apparatus according to this embodiment will be described with reference to specific examples by appropriate using the sample texts illustrated in FIGS. 2A and 2B.

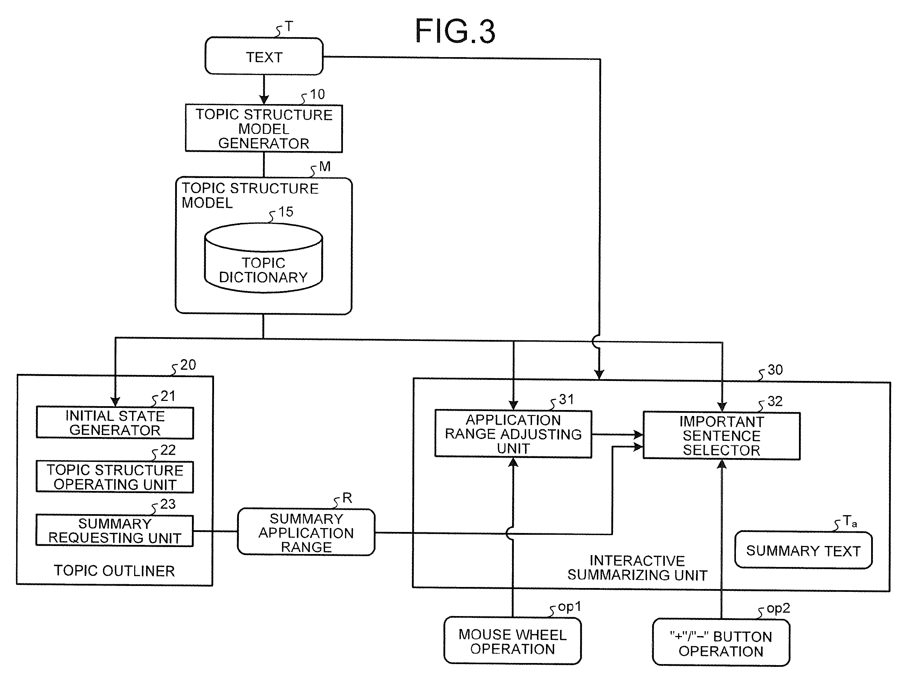

FIG. 3 is a block diagram that illustrates the whole configuration of a text processing apparatus. The text processing apparatus according to this embodiment, as illustrated in FIG. 3, includes a topic structure model generator 10, which may be simply referred to as a generator, a topic outliner 20, which may be referred to as a list display unit, and an interactive summarizing unit 30, which may be referred to as a summary display unit. The topic outliner 20 is a processing module that corresponds to the outliner window 101 of the display screen 100 illustrated in (a) in FIG. 1. The interactive summarizing unit 30 is a processing module that corresponds to the body window 102 of the display screen 100 illustrated in (a) in FIG. 1. The topic structure model generator 10 is a processing module that generates a topic structure model M, which may be referred to as topic structure information, used for the process of the topic outliner 20 and the process of the interactive summarizing unit 30.

The topic structure model generator 10 analyzes an input text T and generates a topic structure model M.

The topic structure model M is a model that is introduced for easy understanding of the structure of the semantic topic of the text T without reading the entire text T. In the topic structure model M according to this embodiment, particularly, it is of importance to acquire a subordinate relation between topics and a context between topics. The subordinate relation between topics is a relation in which a topic is a part of another topic. The context between topics is information that represents the order in which the topics appear.

The subordinate relation between topics is effective for an efficient skip of the text T. The reason for this is that, when it appears to a user that a topic Y is a part of a topic X in accordance with the subordinate relation between topics, the user can determine that the description of the topic Y does not need to be read at a time point when the topic X is determined not to be interesting. In addition, the subordinate relation between topics is effective for understanding the reason why the topic is occurred. The reason for this is that, when it appears to a user that the topic Y is a part of the topic X in accordance with the subordinate relation between topics, the user can understand that the topic Y is derived from the topic X. When the reason why a topic is generated is understood, the context can be easily understood in a case where the text T is read from the middle using the outliner or the like.

The context between topics is effective for catch the flow of the topics in the text T. Generally, even between independent topics that do not have a clear relation to the degree of the subordinate relation, there is a weak influence therebetween so as to form the flow. By representing the context between topics, a user can perceive the flow of the topics. This is helpful for a user to understand the context in a case where the text T is read from the middle by using the outliner or the like.

In this embodiment, the subordinate relation and the context between topics in an actual text T are defined as below.

First, each of matters appearing in the text T is referred to as a "topic", and a character string (it is mainly a word but may be a phrase or a sentence including a plurality of words) representing a matter of a topic is referred to as a "topic word". In a case where mutually-different character strings represent the same matter, the character strings are topic words having a co-reference relation. Among them, a topic word that has the straightest expression is referred to as a "topic name" corresponding to the topic. In addition, the topic belonging to a "child topic" to be described later is regarded to be also a topic word that belonging to a "parent topic".

In addition, in the text T, a range from a position at which a topic word belonging to a specific topic first appears to a position at which a topic word belonging to the same topic appears last is regarded as a range in which the topic is active. Particularly, this range is referred to as a "topic distribution range".

In the text T, in a case where, at a precedent position of a sentence in which a topic word belonging to a specific topic appears first, a topic word belonging to another topic is present, the specific topic is regarded to be subordinate to another topic to which the topic word that is previously present belongs. For example, in "· · · as powdered milk, regular milk and · · ·" of row number 7 of the sample text illustrated in FIG. 2A, a topic "regular milk" is regarded to be subordinate to a topic "powdered milk". However, another topic to which a previous topic word belongs is in the relation of a parallel structure, the topic is not set as the target for the subordination. For example, in "· · · as powdered milk, regular milk and peptide milk · · ·", of row number 7 of the sample text illustrated in FIG. 2A, a topic "peptide milk" is not subordinate to a topic "regular milk" but is subordinate to a topic "powdered milk". As a method of determining whether or not topics are in the relation of a parallel structure, for example, there is a method in which the relation is determined by referring to a knowledge dictionary that is separately prepared or the like.

In addition, in this embodiment, while a subordinate relation between topics is determined with a sentence of the text T being used as the processing unit, the processing unit used for determining a subordinate relation between topics is not limited to the sentence. Other than that, a subordinate relation between topics may be determined with a predetermined text unit such as a phrase or a paragraph being used as the processing unit.

A topic that is subordinate to another topic is referred to as a "child topic" of the another topic, and a topic that causes another topic to be subordinate thereto is referred to as a "parent topic" of the another topic. In addition, topics that are subordinate to the same parent topic are referred to as "brother topics". In the above-described example, a topic "regular milk" and a topic "peptide milk" are brother topics. In addition, in a case where a plurality of child topics are subordinate to the parent topic in series, such a group of child topics are referred to as "descendant topics" of the parent topic.

In the text T, the context between topics is determined based on the positions at which the front-end portions of topic distribution ranges appear using the topic distribution ranges of the topics. In other words, in a case where the front-end portion of the topic distribution range of a specific topic is located at a precedent position of the front-end portion of the topic distribution range of another topic in the text T, the specific topic is regarded as a topic that is previous to another topic described above.

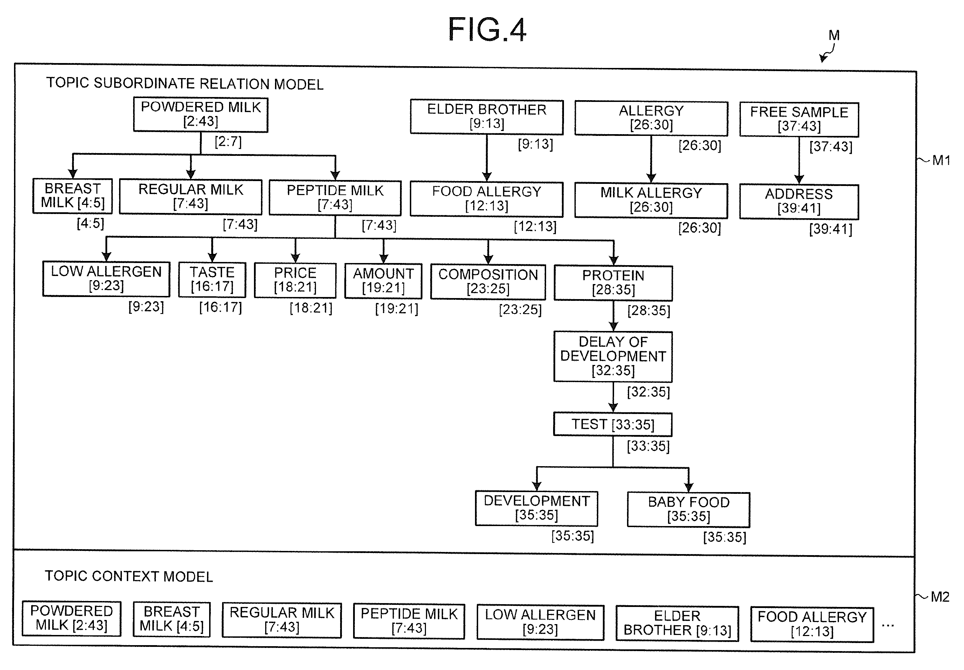

FIG. 4 is a diagram that illustrates an example of the topic structure model M generated by analyzing the sample texts illustrated in FIGS. 2A and 2B under the definitions described above. As illustrated in FIG. 4, the topic structure model M is configured by a topic subordinate relation model M1 and a topic context model M2. In the example represented in FIG. 4, the topic subordinate relation model M1 is illustrated in an upper part of the figure, and the topic context model M2 (a part thereof) is illustrated in a lower part of the figure.

The topic subordinate relation model M1 represents the subordinate relation between topics using a tree structure. The topic context model M2 represents the context between topics using a list structure (as a topic is located on the further left side, the topic is represented to appear on the further front side of the text). In each node that represents a topic, a topic name and a topic distribution range using row numbers are denoted. In the example illustrated in FIG. 4, a topic distribution range at the time of excluding the topic words of descendant topics is denoted all together just below each node for reference.

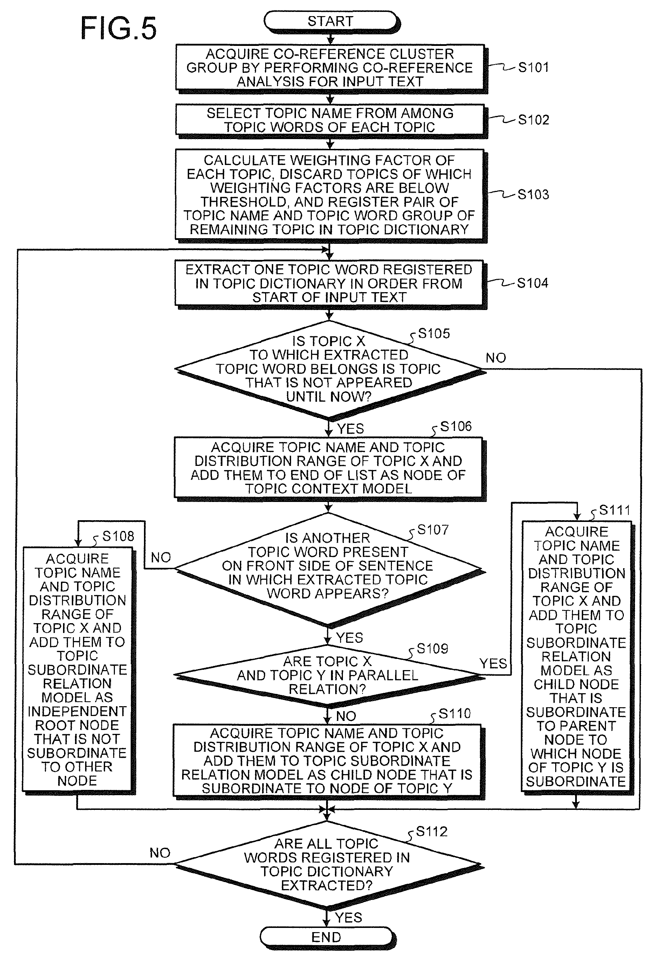

FIG. 5 is a flowchart that illustrates an example of the processing procedure of the topic structure model generator 10. The topic structure model generator 10 receives an input text T and, for example, performs the process of Steps S101 to S112 illustrated in FIG. 5, thereby generating a topic structure model M.

Step S101: The topic structure model generator 10 acquires a co-reference cluster group (including a cluster having a member number of "1") by performing a co-reference analysis for the input text T. Each cluster of the acquired co-reference cluster group represents one topic, and the member thereof is a topic word. Here, the target for the co-reference analysis includes not only words included in the text T but also a phrase and a sentence. For example, "when a nut-based food is fed, it may cause pimples in the skin" of row number 12 of the sample text illustrated in FIG. 2A and "food allergy" of row number 13 are in a co-reference relation.

Step S102: The topic structure model generator 10 selects a topic name from among topic words of each topic. Here, a topic word "of which the TFIDF value is a maximum (in the case of a topic word having the number of words of two or more, the average value thereof)" and "of which the number of word is a minimum" is selected from topic words of each topic as a topic word. For example, while "three year old boy" of row number 10 of the sample text illustrated in FIG. 2A, "elder brother" of row number 11, and "your elder child" of row number 13 are topic words of the same topic, in a case where the TFIDF values thereof are the same, "elder brother" having the smallest number of words is selected as a topic name. However, in a case where the two conditions described above are contradictory to each other, any one thereof may be used with high priority.

Step S103: The topic structure model generator 10 calculates a degree of importance of each topic. Here, an average value of the TFIDF values of topic words belonging to each topic will be used as the degree of importance. Then, the topic structure model generator 10 discards a topic of which the acquired degree of importance is below a predetermined threshold and, for each of the remaining topics, registers a pair of the topic name and the topic word group in a topic dictionary 15 (see FIG. 3).

Step S104: The topic structure model generator 10 extracts one topic word registered in the topic dictionary 15 in order from the start of the input text T. Hereinafter, a topic to which the topic word extracted in Step S104 belongs will be referred to as a topic X.

Step S105: The topic structure model generator 10 determines whether or not the topic X is a topic that does not appear until now. Then, the process proceeds to Step S106 in a case where the result of the determination is "Yes", and the process proceeds to Step S112 in a case where the result of the determination is "No".

Step S106: The topic structure model generator 10 acquires the topic name and the topic distribution range of the topic X and adds the topic to the end of the list as a node of the topic context model M2.

Step S107: The topic structure model generator 10 determines whether or not a topic word of another topic (hereinafter, referred to as a topic Y) is present by going back to the front side of a sentence in which the topic word extracted in Step S104 appears. Then, the process proceeds to Step S108 in a case where the result of the determination is "No", and the process proceeds to Step S109 in a case where the result of the determination is "Yes".

Step S108: The topic structure model generator 10 acquires the topic name and the topic distribution range of the topic X and adds the topic to the topic subordinate relation model M1 as an independent root node that is not subordinate to the other nodes in the topic subordinate relation model M1.

Step S109: The topic structure model generator 10 determines whether or not the topic X and topic Y are in a parallel relation. Then, the process proceeds to Step S110 in a case where the result of the determination is "No", and the process proceeds to Step S111 in a case where the result of the determination is "Yes".

Step S110: The topic structure model generator 10 sets the topic X as a child topic of the topic Y, acquires the topic name and the topic distribution range of the topic X, and adds the topic X to the topic subordinate relation model M1 as a child node that is subordinate to the node of the topic Y in the topic subordinate relation model M1.

Step S111: The topic structure model generator 10 sets the topic X as a brother topic of the topic Y, acquires the topic name and the topic distribution range of the topic X, and adds the topic X to the topic subordinate relation model M1 as a child node that is subordinate to the parent node to which the node of the topic Y is subordinate in the topic subordinate relation model M1.

Step S112: The topic structure model generator 10 determines whether or not all the topic words registered in the topic dictionary 15 are extracted from the input text T. Then, the process is returned to Step S104 and the process of Step S104 and subsequent steps are repeated in a case where the result of the determination is "No", and the series of the process terminates in a case where the result of the determination is "Yes".

The topic outliner 20, as illustrated in FIG. 3, includes three sub modules of an initial state generator 21, a topic structure operating unit 22, and a summary requesting unit 23. Hereinafter, the processing procedure performed in each of such modules will be described.

The initial state generator 21 generates an initial state of a topic structure list to be displayed on the outliner window 101 in accordance with the specification described below based on the topic structure model M generated by the topic structure model generator 10.

In this embodiment, a topic structure list in which "GUI nodes" are arranged in a list pattern is displayed on the outliner window 101. Then, in accordance with the hierarchical relation of the GUI nodes in the topic structure list, the context of the topics is represented. In other words, in the topic structure list displayed on the outliner window 101, a topic represented by a GUI node arranged on the upper side represents a topic that appears on the front side of a topic represented by a GUI node arranged on the lower side thereof in the text T.

In addition, as a label of each GUI node that is included in the topic structure list, the topic name of the topic represented by the GUI node is used. In a case where the topic represented by the GUI node is subordinate to another topic (parent topic), the topic name of the parent topic is denoted on the front side of the topic name of the topic represented by the GUI node, and, by using a slash-separated path notation similar to a path notation of a file system, a subordinate relation between topics represented by two topic names is represented. In a case where the parent topic of the topic represented by the GUI node is further subordinate to another topic, the topic name of the another topic is denoted on the further front side of the topic name of the parent topic, and a subordinate relation between such topics is represented by using a slash-separated path notation. In other words, the label of the GUI node that represents a topic including a plurality of ancestors in the direct line includes a plurality of slash-separated topic names, and the rearmost topic name is the topic name of the topic represented by the GUI node.

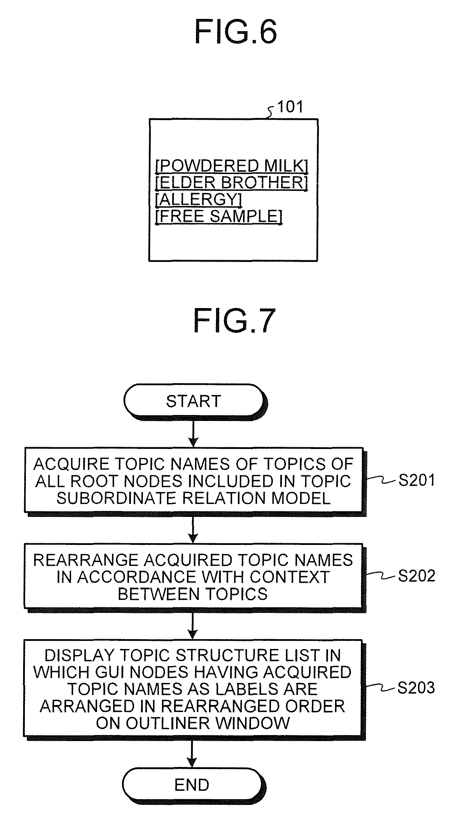

FIG. 6 is a diagram that illustrates the initial state of a topic structure list generated based on the topic structure model M illustrated in FIG. 4 and illustrates the topic structure list that is initially displayed on the outliner window 101. The initial state of the topic structure list, as illustrated in FIG. 6, is a state in which GUI nodes corresponding to the topic that serves as a root node of the topic subordinate relation model M1 are listed in accordance with the order within the list of the topic context model M2. In the example illustrated in FIG. 6, in the topic structure model M illustrated in FIG. 4, four GUI nodes respectively having topic names "powdered milk", "elder brother", "allergy", and "free sample" of the topic forming the root node of the topic subordinate relation model M1 as labels are listed in this order.

FIG. 7 is a flowchart that illustrates an example of the processing procedure of the initial state generator 21. The initial state generator 21 receives the topic structure model M and generates the initial state of the topic structure, for example, by performing the process of Steps S201 to S203 illustrated in FIG. 7.

Step S201: The initial state generator 21 acquires the topic names of the topics of all the root nodes included in the topic subordinate relation model M1 of the topic structure model M. In the example of the topic structure model M illustrated in FIG. 4, four topic names of "powdered milk", "elder brother", "allergy", and "free sample" are acquired.

Step S202: The initial state generator 21 rearranges the topic names acquired in Step S201 in accordance with the topic context between topics based on the order represented in the topic context model M2 of the topic structure model M. In the example of the topic structure model M illustrated in FIG. 4, four topic names of "powdered milk", "elder brother", "allergy", and "free sample" acquired in Step S201 are rearranged in this order.

Step S203: The initial state generator 21 displays the topic structure list in which the GUI nodes having the topic names acquired in Step S201 as the labels are arranged in the order rearranged in Step S202 on the outliner window 101. Accordingly, the initial state of the topic structure list as illustrated in FIG. 6 is displayed on the outliner window 101.

The topic structure operating unit 22, based on the topic structure model M generated by the topic structure model generator 10, generates a new topic structure list according to an opening/closing operation of the GUI node in accordance with the specification represented below and displays the generated new topic structure list on the outliner window 101. In accordance with the process of the topic structure operating unit 22, the topic structure list displayed on the outliner window 101 changes from the initial state generated by the initial state generator 21. Here, the opening/closing of the GUI node represents expanding (opening) the GUI node into the GUI node of a child topic or causing the GUI node to converge (closing) to the GUI node of a parent topic in accordance with the topic subordinate relation model M1.

In this embodiment, as the initial state, as illustrated in FIG. 6, a topic structure list in which only GUI nodes corresponding to the topic forming the root node of the topic subordinate relation model M1 are arranged is displayed on the outliner window 101. Thereafter, in accordance with a user's operation having an arbitrary GUI node included in the topic structure list as the target, the GUI node can toggle between the opening/closing states.

When the user performs an opening operation, which may be referred to as a first operation, of an arbitrary GUI node included in the topic structure list, the GUI node is removed from the display target, and a new topic structure list in which a GUI node group representing a child topic of the topic represented by the GUI node is added as a display target instead of the removed GUI node is generated and is displayed on the outliner window 101. At this time, the GUI node group added to the topic structure list is inserted to a position according to the context of the topic within the new topic structure list in accordance with the order represented in the topic context model M2 of the topic structure model M.

On the other hand, when the user performs a closing operation, which may be referred to as a second operation, of an arbitrary GUI node included in the topic structure list, the GUI node and all the GUI nodes representing a brother topic of the topic represented by the GUI node are removed from the display target, and a new topic structure list in which a GUI node representing a parent topic of the topic represented by the GUI node is added as a display target instead of the removed GUI nodes is generated and is displayed on the outliner window 101. At this time, the GUI node added to the topic structure list is inserted to a position according to the context of the topic within the new topic structure list in accordance with the order represented in the topic context model M2 of the topic structure model M.

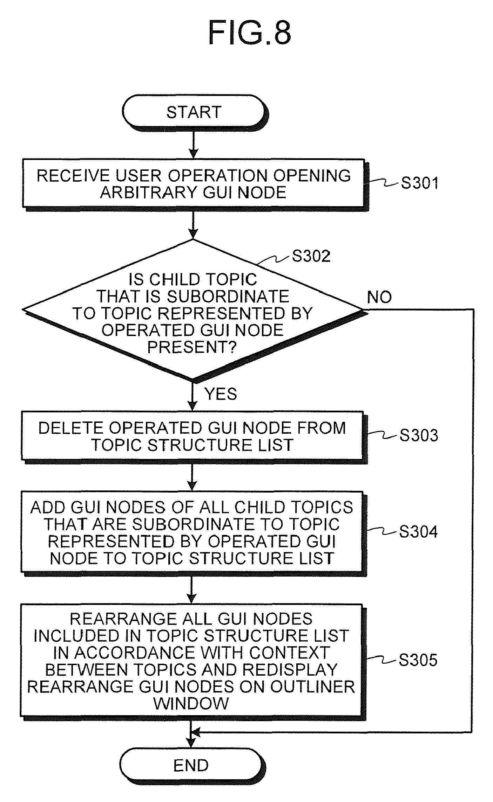

FIG. 8 is a flowchart that illustrates an example of the processing procedure of the topic structure operating unit 22 in a case where an opening operation is performed for an arbitrary GUI node. When an opening operation of an arbitrary GUI node within the topic structure list displayed on the outliner window 101 is performed, the topic structure operating unit 22 changes the topic structure list displayed on the outliner window 101, for example, by performing the process of Steps S301 to S305 illustrated in FIG. 8.

Step S301: When the user performs a predetermined operation (first operation) such as clicking on an arbitrary GUI node with the mouse cursor matching the GUI node, the topic structure operating unit 22 receives the operation. Here, in a case where a plurality of slash-separated topic names are denoted in the label of the GUI node that is the operation target, a topic name that is operated is distinguished, and, only in a case where the operated topic name is the topic name (the topic name denoted at the rear end of the label) of the topic represented by the GUI node, the process to be described below is performed.

Step S302: The topic structure operating unit 22 determines whether or not a child topic that is subordinate to the topic represented by the operated GUI node is present. Then, the process proceeds to Step S303 in a case where the result of the determination is "Yes", and the process terminates in a case where the result of the determination is "No".

Step S303: The topic structure operating unit 22 deletes the operated GUI node from the topic structure list.

Step S304: The topic structure operating unit 22 adds GUI nodes of all the child topics that are subordinate to the topic represented by the operated GUI node to the topic structure list. In the label of the GUI node of the child topic, on the front side of the topic name of the topic (child topic) represented by the GUI node, the topic name of the topic (parent topic) represented by the operated GUI node is denoted in a state in which a subordinate relation is represented by a slash-separated path notation.

Step S305: The topic structure operating unit 22 rearranges all the GUI nodes included in the topic structure list in accordance with the context between topics based on the order represented in the topic context model M2 of the topic structure model M and displays the rearranged GUI nodes on the outliner window 101.

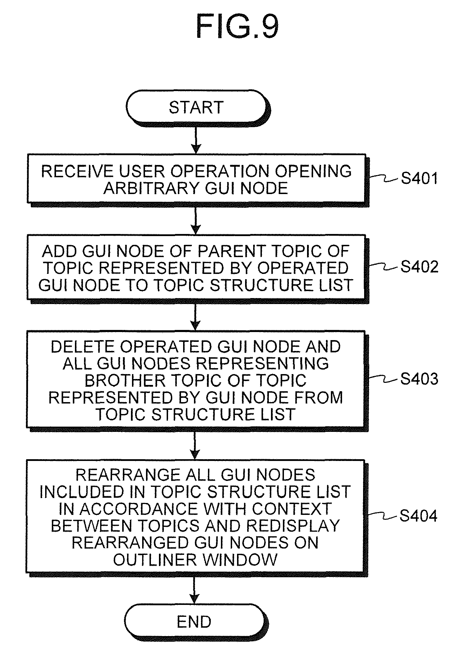

FIG. 9 is a flowchart that illustrates an example of the processing procedure of the topic structure operating unit 22 in a case where the closing operation of an arbitrary GUI node is performed. In a case where the closing operation of an arbitrary GUI node within the topic structure list displayed on the outliner window 101 is performed, the topic structure operating unit 22 changes the topic structure list displayed on the outliner window 101, for example, by performing the process of Steps S401 to S404 illustrated in FIG. 9.

Step S401: When the user performs a predetermined operation (second operation) such as clicking on an arbitrary GUI node with the mouse cursor matching the GUI node, the topic structure operating unit 22 receives the operation. Here, in the GUI node that is the target for the closing operation, a plurality of slash-separated topic names are denoted in the label. The topic structure operating unit 22 distinguishes a topic name that has been operated from among the plurality of topic names denoted in the label of the GUI node and, only in a case where the operated topic name is the topic name (in other words, a topic name that is immediately prior to the topic name denoted at the rearmost end of the label) of the parent topic of the topic represented by the GUI node, performs the process to be described below.

Step S402: The topic structure operating unit 22 adds the GUI node of the parent topic of the topic represented by the operated GUI node to the topic structure list.

Step S403: The topic structure operating unit 22 deletes the operated GUI node and all the GUI nodes representing brother topics of the topic represented by the GUI node from the topic structure list.

Step S404: The topic structure operating unit 22 rearranges all the GUI nodes included in the topic structure list in accordance with the context between topics based on the order represented in the topic context model M2 of the topic structure model M and displays the rearranged GUI nodes on the outliner window 101.

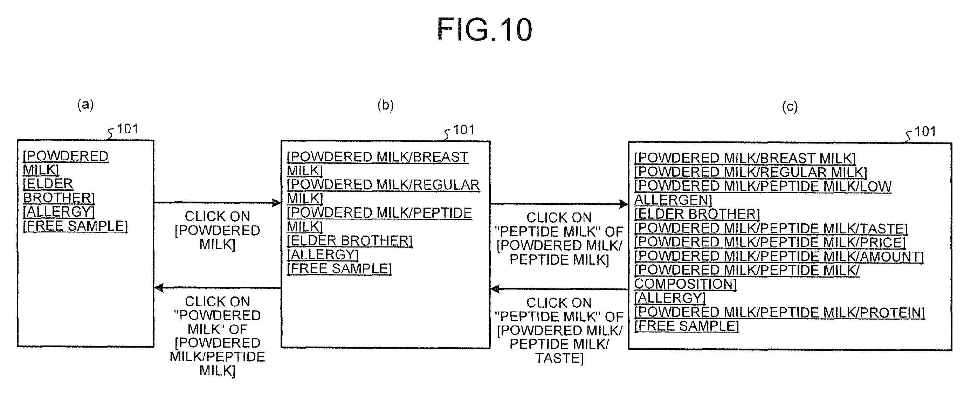

FIG. 10 illustrates an example of the screen transition of the outliner window 101 in a case where the opening/closing operation of a GUI node is performed.

For example, from the state illustrated in (a) in FIG. 10, when the user clicks on the GUI node of "powdered milk", the GUI node of "powdered milk" is expanded, and, as illustrated in (b) in FIG. 10, three GUI nodes of "powdered milk/breast milk", "powdered milk/regular milk", "powdered milk/peptide milk" are arranged on the upper side of the GUI node of "elder brother". In addition, from the state illustrated in (b) in FIG. 10, when the user clicks on the part of "peptide milk" of the GUI node of "powdered milk/peptide milk", the GUI node of "powdered milk/peptide milk" is expanded, and, as illustrated in (c) in FIG. 10, a GUI node of "powdered milk/peptide milk/low allergy" is arranged on the upper side of the GUI node of "elder brother", four GUI nodes of "powdered milk/peptide milk/taste", "powdered milk/peptide milk/price", "powdered milk/peptide milk/amount" and "powdered milk/peptide milk/composition" are arranged between the GUI node of "elder brother" and the GUI node of "allergy", and a GUI node of "powdered milk/peptide milk/protein" is arranged on the lower side of the GUI node of "allergy".

Meanwhile, from the state illustrated in (c) in FIG. 10, for example, when the user clicks on the part of "peptide milk" of the GUI node of "powdered milk/peptide milk/taste", the GUI node of "powdered milk/peptide milk/taste" and all the GUI nodes of the brother topics converge to the GUI node of the "powdered milk/peptide milk", and the state is returned to the state illustrated in (b) in FIG. 10. In addition, from the state illustrated in (b) in FIG. 10, when the user clicks on the part of "powdered milk" of the GUI node of "powdered milk/peptide milk", the GUI node of "powdered milk/peptide milk" and all the GUI nodes of brother topics converge to the GUI node of "powdered milk", and the state is returned to the state illustrated in (a) in FIG. 10.

The summary requesting unit 23, for a topic designated by the user through the topic structure list displayed on the outliner window 101, requests a summary of the text T for the interactive summarizing unit 30 such that the entire topic distribution range fits into the body window 102 without any excess or insufficiency. The process of summarizing the text T is performed by the interactive summarizing unit 30 in accordance with a request from the summary requesting unit 23, and the result thereof is displayed on the body window 102.

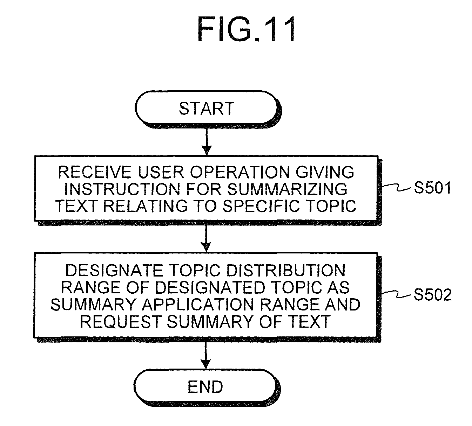

FIG. 11 is a flowchart that illustrates an example of the processing procedure of the summary requesting unit 23. The summary requesting unit 23 requests the summary of the text T for the interactive summarizing unit 30, for example, by performing the process of Steps S501 to S502 illustrated in FIG. 11.

Step S501: When a predetermined operation, which may be referred to as a third operation, is performed as an operation for giving an instruction for summarizing the text T relating to a topic such as a user's clicking on any one of topic names included in the label of an arbitrary GUI node within the topic structure list with the mouse cursor being matched thereto while pressing a control key, the summary requesting unit 23 receives the operation.

Step S502: The summary requesting unit 23 designates the topic distribution range of the topic designated by the operation received in Step S501 as a text range to summarize R, designates the sentence amount (the number of characters or the number of sentences) fitting into the body window 102 as a target size, and requests the summary of the text T for the interactive summarizing unit 30.

The interactive summarizing unit 30 interactively summarizes the input text T while utilizing the topic structure model M generated by the topic structure model generator 10 and displays the summary on the body window 102. Particularly, the interactive summarizing unit 30 according to this embodiment has characteristics represented in (1) to (4) to be described below.

(1) While the summary of the text T is displayed on the body window 102 in accordance with a request from the summary requesting unit 23 of the topic outliner 20, the summarizing rate can be dynamically changed in accordance with a user's operation.
(2) Relating to the operation of changing the summarizing rate, there are a "global mode" in which the summarizing rate of all the text T is changed and a "local mode" in which the summarizing rate of only a local area having an interesting part as its center is changed out of the text T.
(3) In the local mode, by using the topic structure model M, the range to which the same summarizing rate is applied is automatically adjusted such that the summarizing rate is not changed as possibly as can while a topic is continued.
(4) When an important phrase or an important sentence is selected in the summary process, a importance evaluation that matches the topic structure is made using the topic structure model M.

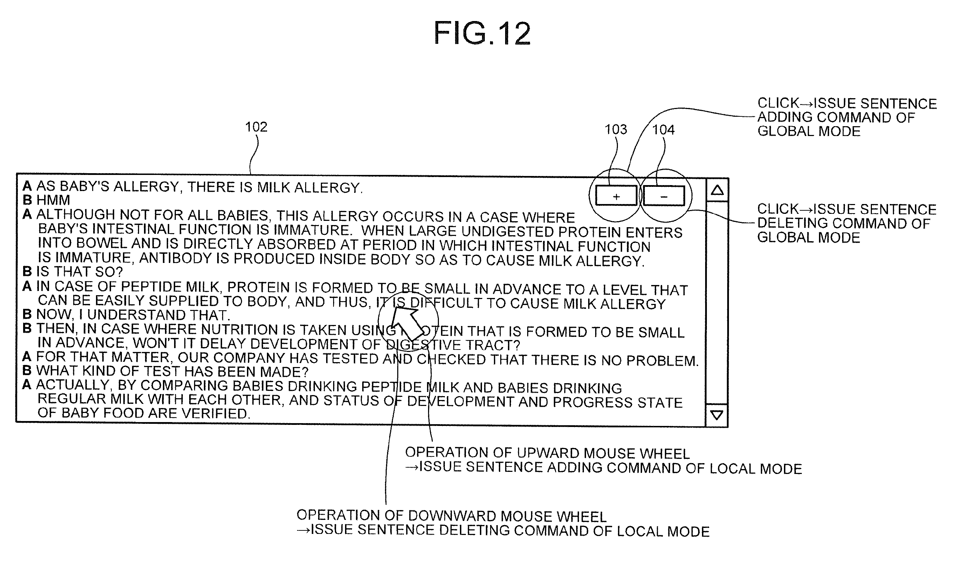

FIG. 12 is a diagram that summaries an operation method for changing the summarizing rate of the text T displayed on the body window 102. The operation method illustrated in FIG. 12 is an example of a case where a mouse is used as the operation device. In a case where a device other than the mouse is used as the operation device, an operation method that is appropriate to the device may be set in advance.

When the user clicks on a "+" button 103 disposed on the upper right side of the body window 102 with the cursor being matched thereto, a sentence adding command of the global mode is issued. On the other hand, when the user clicks on a "-" button 104 disposed on the upper right side of the body window 102 with the cursor being matched thereto, a sentence deleting command of the global mode is issued. Such user's operations correspond to the "+" and "-" button operations op2 that are illustrated in FIG. 3.

In addition, when the user performs an upward mouse wheel operation with the mouse cursor being matched to a text position to be focused on the body window 102, a sentence adding command of the local mode having the position of the cursor as the center is issued. On the other hand, when the user performs a downward mouse wheel operation with the mouse cursor being matched to a text position to be focused on the body window 102, a sentence deleting command of the local mode having the position of the cursor as the center is issued. Such a user operation, which may be referred to as a fourth operation, corresponds to the mouse wheel operation op1 illustrated in FIG. 3.

In this embodiment, for the simplification of description, as the summarizing process for the text T, only a sentence selecting process that is the most basic process in the automatic summarizing process is assumed to be performed. However, the summarizing of the text T may be performed using any one of various existing technologies of automatic summarizing such as phrase selection and paraphrasing and sentence shortening. A representative example of the automatic summarizing that is based on the sentence selection is disclosed in a reference literature represented below.

Reference Literature: H. P. Luhn. The automatic creation of literature abstracts. IBM Journal of Research and Development, Vol. 2, No. 2, pp159-165, 1958

The interactive summarizing unit 30, as illustrated in FIG. 3, includes two sub modules of an application range adjusting unit 31 and an important sentence selector 32. Hereinafter, the process of each of such sub modules will be sequentially described.

The application range adjusting unit 31 is a sub module that determines an appropriate text range that is to be the summarizing target when the user performs the mouse wheel operation op1 (fourth operation) on the body window 102.

When the summarizing process is started at a different summarizing rate from a position located in the middle of the continuation of the same topic, the readability is lowered, and it is difficult to follow the story. Accordingly, ideally, it is preferable that the position at which the topic changes and the position at which the summarizing rate changes coincide with each other. Thus, the application range adjusting unit 31 performs an adjustment process so as to cause the range, which may be referred to as a summary application range, to which the summarizing rate according to the operation is applied and the topic distribution range to coincide with each other by referring to the topic structure model M.

However, since there is a plurality of topics each having the text position, at which the mouse cursor is placed, to be included in the topic distribution range thereof, a topic distribution range with which the summary application range is caused to coincide needs to be determined. With regard to this, in this embodiment, two kinds of methods including "manual" in which the topic distribution range to coincide with the summary application range is selected by the user and "automatic" in which the topic distribution range to coincide with the summary application range is automatically selected by a text processing apparatus are prepared.

In the case of the manual method between the two methods, for example, it may be configured such that topics that are candidates are displayed in a menu, and one thereof is selected by the user. On the other hand, in the case of the automatic method, there are two kinds of methods including the adjustment of the application range that is based on a highest-density preferred algorithm and the adjustment of the application range that is based on a weighted synthesis algorithm. Hereinafter, the adjustment of the application range that is based on the highest-density preferred algorithm and the adjustment of the application range that is based on the weighted synthesis algorithm will be individually described.

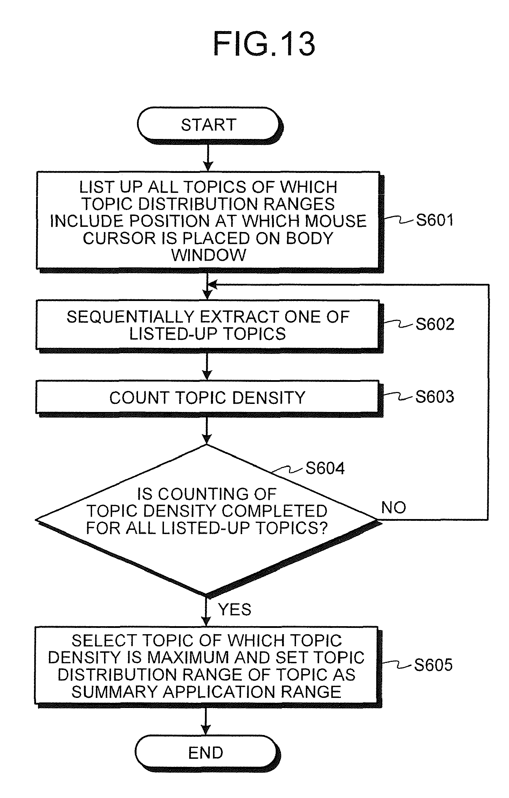

FIG. 13 is a flowchart that illustrates an example of the processing procedure of the application range adjusting unit 31 in a case where the adjustment of an application range is performed based on the highest-density preferred algorithm. In a case where the adjustment of the application range is performed based on the highest-density preferred algorithm, the application range adjusting unit 31 adjusts the summary application range, for example, by performing the process of Steps S601 to S605 illustrated in FIG. 13.

Step S601: The application range adjusting unit 31 lists up all the topics of which the topic distribution ranges respectively include the position at which the mouse cursor is placed on the body window 102.

Step S602: The application range adjusting unit 31 sequentially extracts one of the topics listed up in Step S601.

Step S603: The application range adjusting unit 31 counts the number of topic words belonging to the topic extracted in Step S602 in a text range (hereinafter, referred to as a density measurement range) within N words (here, N is a constant) to the front and rear sides from the position at which the mouse cursor is positioned as the center. This number is referred to as a topic density.

Step S604: The application range adjusting unit 31 determines whether or not the counting of the topic density is completed for all the topics listed up in Step S601. Then, in a case where the result of the determination is "Yes", the process proceeds to Step S605. On the other hand, in a case where the result of the determination is "No", the process is returned to Step S602 and the process of Step S602 and subsequent steps are repeated.

Step S605: The application range adjusting unit 31 selects a topic of which the topic density counted in Step S603 is a maximum and sets the topic distribution range of the topic as the summary application range.

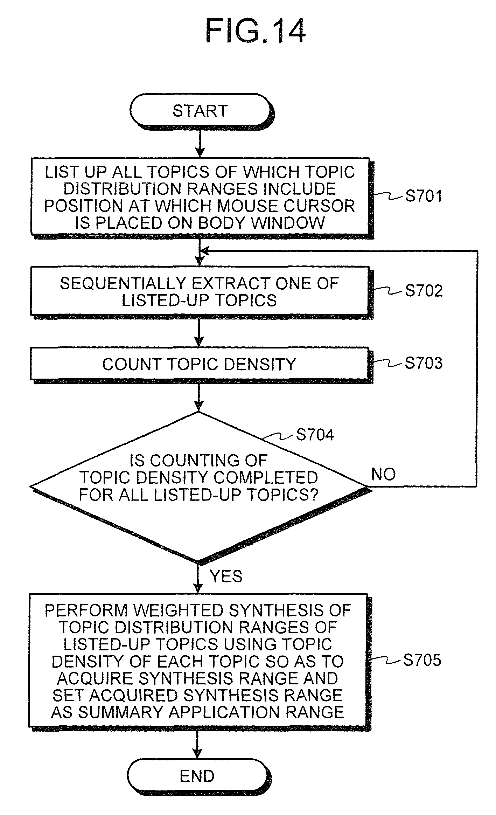

FIG. 14 is a flowchart that illustrates an example of the processing procedure of the application range adjusting unit 31 in a case where the adjustment of an application range is performed based on a weighted synthesis algorithm. In a case where the adjustment of the application range is performed based on the weighted synthesis algorithm, the application range adjusting unit 31 adjusts the summary application range, for example, by performing the process of Steps S701 to S705 illustrated in FIG. 14.

Step S701: The application range adjusting unit 31 lists up all the topics of which the topic distribution ranges respectively include the position at which the mouse cursor is placed on the body window 102.

Step S702: The application range adjusting unit 31 sequentially extracts one of the topics listed up in Step S701.

Step S703: The application range adjusting unit 31, similar to Step S603 illustrated in FIG. 13, counts the topic density of the topic extracted in Step S702.

Step S704: The application range adjusting unit 31 determines whether or not the counting of the topic density is completed for all the topics listed up in Step S701. Then, in a case where the result of the determination is "Yes", the process proceeds to Step S705. On the other hand, in a case where the result of the determination is "No", the process is returned to Step S702 and the process of Step S702 and subsequent steps are repeated.

Step S705: The application range adjusting unit 31 performs weighted synthesis of the topic distribution ranges of the topics listed in Step S701 using the topic density counted in Step S703 so as to acquire a synthesis range and sets the acquired synthesis range as the summary application range. More specifically, when a distance from the position at which the mouse cursor is placed to the front boundary of the synthesis range is f, and a distance from the position to the rear boundary is b, the synthesis range is a range of f to b illustrated in the following Equations (1) to (3).

$$f = \sum_i w_i \cdot f_i \qquad (1)$$

$$b = \sum_i w_i \cdot b_i \qquad (2)$$

$$w_i = d_i/\Sigma_j \cdot d_j \qquad\qquad (3)$$

Here, i and j are topic numbers, $f_i$ is a distance from the position at which the mouse cursor is placed to the front boundary of the topic distribution range of topic i, $b_i$ is a distance from the position at which the mouse cursor is placed to the rear boundary of the topic distribution range of the topic i, and $d_i$ is the topic density of the topic i, and $d_j$ is the topic density of the topic j.

The important sentence selector 32 is a sub module that generates a summary text $T_a$ (see FIG. 3) in accordance with a request from the summary requesting unit 23 and displays the summary text on the body window 102 and, when the user performs a mouse wheel operation op1 or a "+" or "-" button operation op2 on the body window 102, performs the process of deleting or adding a sentence so as to update the summary text $T_a$.

In a case where the summary text $T_a$ is updated in accordance with the mouse wheel operation op1, the important sentence selector 32 summarizes the text of the summary application range that is determined by the application range adjusting unit 31 at a summarizing rate according to the operation amount and sets a resultant text as a new summary text $T_a$. On the other hand, in a case where the summary text $T_a$ is updated in accordance with a "+" or "-" button operation op2, the important sentence selector 32 summarizes the entire text T at a summarizing rate according to the operation amount and sets a resultant text as a new summary text $T_a$.

The important sentence selector 32, particularly, determines the importance of a sentence by using the topic structure model M. Accordingly, for example, a determination of a topic including many descendant topics as important or the like can be made.

Hereinafter, a sentence deleting process and a sentence adding process, which are performed by the important sentence selector 32, and a method of calculating a score used in such processes will be individually described.

The sentence deleting process is performed when a sentence deleting command of the global mode or a sentence deleting command of the local mode is issued. In addition, also in a case where the request from the summary requesting unit 23 consequently is a request for reducing a text displayed on the body window 102, the sentence deleting process is performed.

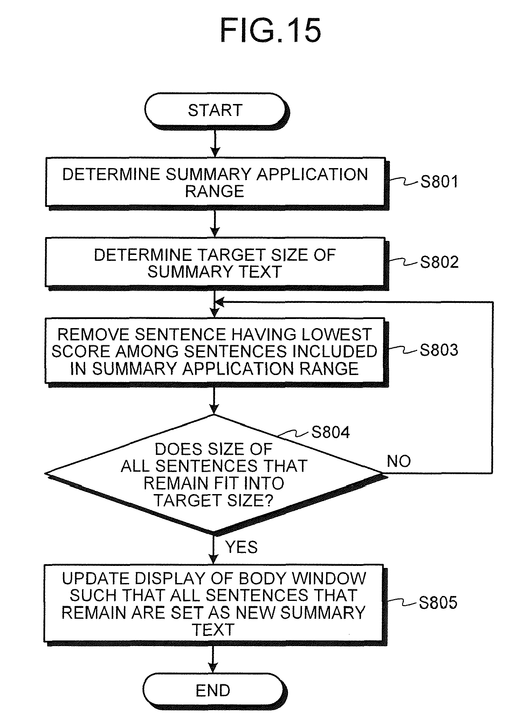

FIG. 15 is a flowchart that illustrates an example of the processing procedure of the important sentence selector 32 in a case where the sentence deleting process is performed. The important sentence selector 32 updates the summary text $T_a$ displayed on the body window 102, for example, by performing the process of Steps S801 to S805 illustrated in FIG. 15.

Step S801: The important sentence selector 32 determines a summary application range of the text T. More specifically, the important sentence selector 32, in the case of being called from the application range adjusting unit 31, sets the processing result acquired by the application range adjusting unit 31 as the summary application range. On the other hand, the important sentence selector 32, in the case of being called from the summary requesting unit 23, sets the summary application range R (see FIG. 3) designated in accordance with the request from the summary requesting unit 23 as the summary application range. In addition, in a case where the summary application range is not particularly designated, the important sentence selector 32 sets the entirety of the text T as the summary application range.

Step S802: The important sentence selector 32 determines the target size (the number of characters or the number of sentences) of the summary text $T_a$. More specifically, in a case where a sentence deleting command of the global mode or a sentence deleting command of the local mode is issued, for example, the important sentence selector 32 may set a value acquired by subtracting a predetermined number from the number of characters or the number of sentences currently displayed on the body window 102 as the target size. In addition, the important sentence selector 32, in the case of being called from the summary requesting unit 23, may set the target size designated by the summary requesting unit 23, in other words, the number of characters or the number of sentences fitting into the body window 102 as the target size.

Step S803: The important sentence selector 32 removes a sentence of which the score, which is calculated using a method to be described later, is the lowest from among sentences included in the summary application range that is determined in Step S801.

Step S804: The important sentence selector 32 determines whether or not the size of all the sentences that is not removed in Step S803 but remain fits into the target size determined in Step S802. Then, in a case where the result of the determination is "Yes", the process proceeds to Step S805. On the other hand, in a case where the result of the determination is "No", the process is returned to Step S803, and the process of Step S803 and subsequent steps are repeated.

Step S805: The important sentence selector 32 updates the display of the body window 102 such that all the sentences that is not removed but remain are set as a new summary text $T_a$.

The sentence adding process is performed when a sentence adding command of the global mode or a sentence adding command of the local mode is issued. In addition, also in a case where the request from the summary requesting unit 23 consequently is a request for increasing a text displayed on the body window 102, the sentence adding process is performed.

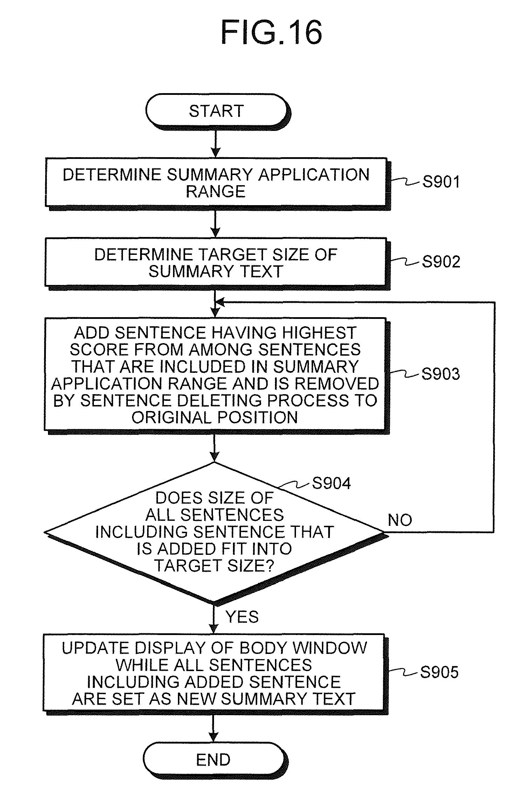

FIG. 16 is a flowchart that illustrates an example of the processing procedure of the important sentence selector 32 in a case where the sentence adding process is performed. The important sentence selector 32 updates the summary text $T_a$ displayed on the body window 102, for example, by performing the process of Steps S901 to S905 illustrated in FIG. 16.

Step S901: The important sentence selector 32 determines a summary application range of the text T. More specifically, the important sentence selector 32, in the case of being called from the application range adjusting unit 31, sets the processing result acquired by the application range adjusting unit 31 as the summary application range. On the other hand, the important sentence selector 32, in the case of being called from the summary requesting unit 23, sets the summary application range R (see FIG. 3) designated in accordance with the request from the summary requesting unit 23 as the summary application range. In addition, in a case where the summary application range is not particularly designated, the important sentence selector 32 sets the entirety of the text T as the summary application range.

Step S902: The important sentence selector 32 determines the target size (the number of characters or the number of sentences) of the summary text $T_a$. More specifically, in a case where a sentence adding command of the global mode or a sentence adding command of the local mode is issued, for example, the important sentence selector 32 may set a value acquired by adding a predetermined number to the number of characters or the number of sentences currently displayed on the body window 102 as the target size. In addition, the important sentence selector 32, in the case of being called from the summary requesting unit 23, may set the target size designated by the summary requesting unit 23, in other words, the number of characters or the number of sentences fitting into the body window 102 as the target size.

Step S903: The important sentence selector 32 adds a sentence of which the score, which is calculated using the method to be described later, is the highest from among sentences that are included in the summary application range determined in Step S901 and are removed by the sentence deleting process to the original position.

Step S904: The important sentence selector 32 determines whether or not the size of all the sentences including the sentence that has been added in Step S903 fits into the target size determined in Step S902. Then, in a case where the result of the determination is "Yes", the process proceeds to Step S905. On the other hand, in a case where the result of the determination is "No", the process is returned to Step S903, and the process of Step S903 and subsequent steps are repeated.

Step S905: The important sentence selector 32 updates the display of the body window 102 such that all the sentences including the added sentence are set as a new summary text $T_a$.

The score that is used in the sentence deleting process or the sentence adding process described above is a score that is calculated from the viewpoint that a topic including many descendant topics is an important topic. Hereinafter, an example of the method of calculating the score will be described.

As a conventional method for calculating a score that represents the degree of importance of a sentence, for example, there is a method in which the position (a lead sentence of a text or a lead sentence of a paragraph is regarded to be important) of a sentence, the TFIDF value of a word included in a sentence, or a specific clue representing the degree of importance of a sentence such as a clue expression such as a "to summarize" is used. The method of calculating the score according to this embodiment is a method in which the topic structure model M is used as a clue that represents the degree of importance of a sentence. This method may be used in combination with a conventional score calculating method (for example, taking a sum or the like). However, hereinafter, for the simplification of the description, a method of calculating a score using only the topic structure model M, which is featured in this embodiment, will be described.

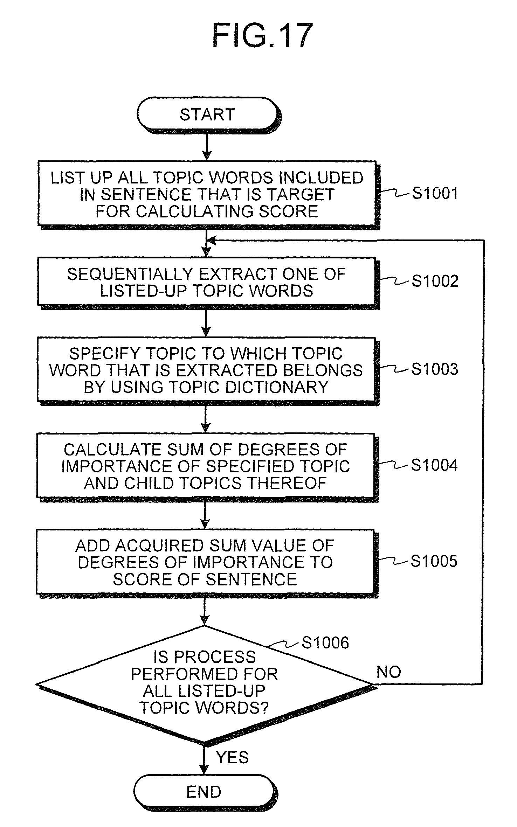

FIG. 17 is a flowchart that illustrates an example of the processing procedure of the important sentence selector 32 in a case where the score of a sentence is calculated. The important sentence selector 32 calculates the score of each sentence included in the text T, for example, by performing the process of Steps S1001 to S1006 illustrated in FIG. 17.

Step S1001: The important sentence selector 32 lists up all the topic words included in a sentence that is the target for calculating a score.

Step S1002: The important sentence selector 32 sequentially extracts one of the topic words that are listed up in Step S1001.

Step S1003: The important sentence selector 32 specifies a topic to which the topic word that is extracted in Step S1002 belongs by using the topic dictionary 15 (see FIG. 3).

Step S1004: The important sentence selector 32 calculates a sum of degrees of importance of the topic specified in Step S1003 and descendant topics thereof. As the degree of importance of a topic, for example, as described above, an average value of the TFIDF values of topic words belonging to the topic is used.

Step S1005: The important sentence selector 32 adds the sum value of the degrees of importance acquired in Step S1004 to the score of the sentence.

Step S1006: The important sentence selector 32 determines whether or not the process of Steps S1003 to S1005 is performed for all the topic words listed up in Step S1001. Then, in a case where the result of the determination is "No", the process is returned to Step S1002, and the process of Step S1002 and subsequent steps are repeated. On the other hand, in a case where the result of the determination is "Yes", the score acquired in Step S1005 is set as the score of the sentence, and the series of the process terminates.

In this embodiment, although the important sentence selector 32 performs the sentence deleting process and the sentence adding process described above with a sentence of the text T used as the processing unit, the processing unit is not limited thereto. Thus, the deleting process or the adding process may be configured to be performed with a predetermined text unit, such as a phrase or a paragraph used as the processing unit.

As detailed description has been presented with reference to specific examples, the text processing apparatus according to this embodiment generates a topic structure model M by analyzing an input text T and displays a topic structure list that briefly represents the subordinate relation and the context between topics included in the text T on the display based on the topic structure model M. Then, the text processing apparatus performs expansion or convergence of a GUI node included in the topic structure list in accordance with a user operation for the topic structure list and, in accordance with a user operation designating an arbitrary GUI node, and displays a summary text $T_a$ relating to the topic represented in the GUI node. In this manner, according to the text processing apparatus of this embodiment, since the process is performed based on the topic structure of the input text T, an explorative access to a text that does not have a logical structure can be made.

In addition, in the example described above, the topic structure model generator 10 is configured to generate a topic structure model M based on the input text T in accordance with the processing procedure illustrated in FIG. 5. However, in consideration of points described below, the processing procedure for generating a topic structure model M may be modified.

As in a case where, for a specific topic, after a topic word appears, the topic word does not appear for some time and thereafter appears, there are cases where a large blank is included in the topic distribution range of a specific topic. In this manner, in the case of a topic having a large blank within the topic distribution range, a topic before the blank and a topic after the blank are frequently employed as mutually-different topics, and the topics before and after the blank may be more easily handled as mutually-different topics. Thus, in a case where a large blank is included within the topic distribution range, topics before and after the blank may be divided into mutually-different topics.

In addition, depending on a topic, there are cases where the topic distribution range is very large. In a case where such a topic is handled by an outliner, when the operation of expanding the topic into child topics is performed, the topic is expanded into a huge number of child topics, and there is concern that a problem such as the disturbance in an operation or the like may occur. Thus, by setting the upper limit of the size of the topic distribution range, for a topic of which the topic distribution range is too large, the topic may be divided into a plurality parts.

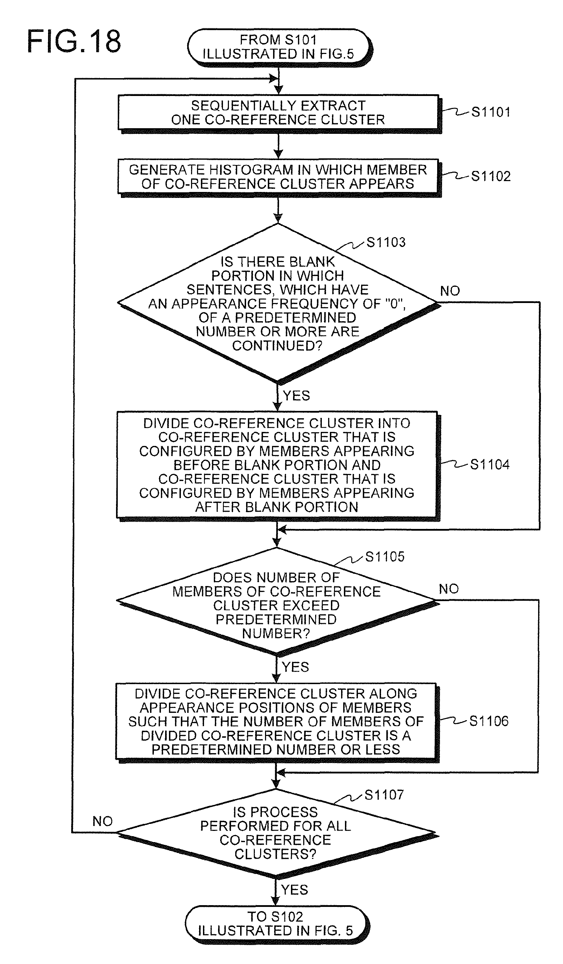

FIG. 18 is a flowchart that illustrates the processing procedure of the topic structure model generator 10 of a case where the above-described modifications are made, and the process added between Steps S101 and S102 illustrated in FIG. 5 is illustrated. In the case of this example, after the process of Step S101 illustrated in FIG. 5, the topic structure model generator 10 performs the process of Steps S1101 to S1107 illustrated in FIG. 18 and then performs the process of Step S102 illustrated in FIG. 5.

Step S1101: The topic structure model generator 10 sequentially extracts one co-reference cluster acquired in Step S101 illustrated in FIG. 5.

Step S1102: The topic structure model generator 10 generates a histogram that represents the frequency in which a member of the co-reference cluster extracted in Step S1101 appears for each sentence of the text T.

Step S1103: The topic structure model generator 10 determines whether or not there is a blank portion in which sentences, which have an appearance frequency of "0", of a predetermined number or more are continued in the histogram generated in Step S1102. Then, the process proceeds to Step S1104 in a case where the result of the determination is "Yes", and the process proceeds to Step S1105 in a case where the result of the determination is "No".

Step S1104: The topic structure model generator 10 divides the co-reference cluster extracted in Step S1101 into a co-reference cluster that is configured by members appearing before the blank portion and a co-reference cluster that is configured by members appearing after the blank portion.

Step S1105: The topic structure model generator 10 determines whether or not the number of members of the co-reference cluster extracted in Step S1101 exceeds a predetermined number. Then, the process proceeds to Step S1106 in a case where the result of the determination is "Yes", and the process proceeds to Step S1107 in a case where the result of the determination is "No".

Step S1106: The topic structure model generator 10 divides the co-reference cluster extracted in Step S1101 along the appearance positions of members such that the number of members of the divided co-reference cluster is a predetermined number of less. In this step, under the assumption that the number of members of the co-reference cluster and the size of the topic distribution range are in the approximately proportional relation, by limiting the number of members of the co-reference cluster to a predetermined number or less, the size of the topic distribution range is limited. However, instead of this step, the process of determining whether nor not the size of the topic distribution range exceeds an upper limit by using the histogram generated in Step S1102 and dividing the topic into a plurality of topics having a topic distribution range of the upper limit or less in a case where the size of the topic distribution range exceeds the upper limit may be configured to be performed.

Step S1107: The topic structure model generator 10 determines whether or not the process of Steps S1102 to S1106 is performed for all the co-reference clusters acquired in Step S101 illustrated in FIG. 5. Then, in a case where the result of the determination is "No", the process is returned to Step S1101, and the process of Step S1101 and subsequent steps are repeated. On the other hand, in a case where the result of the determination is "Yes", the process proceeds to Step S102 illustrated in FIG. 5.

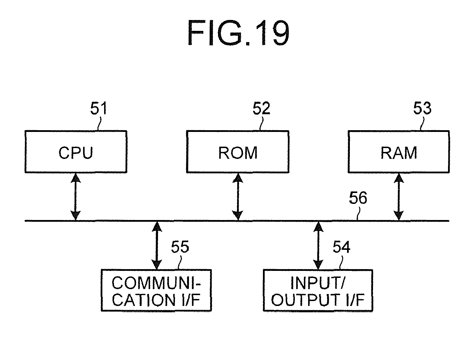

Each of the above-described functions of the text processing apparatus according to this embodiment described above, for example, may be realized by executing a predetermined program in the text processing apparatus. In such a case, the text processing apparatus, for example, as illustrated in FIG. 19, may have a hardware configuration using an ordinary computer that includes a control device such as a Central Processing Unit (CPU) 51, storage devices such as a Read Only Memory (ROM) 52 and a Random Access Memory (RAM) 53, an input/output I/F 54 to which the display device and various operation devices are connected, a communication I/F 55 that is connected to the network to perform communication, a bus 56 connecting the units together, and the like.

The program executed by the text processing apparatus of this embodiment, for example, is recorded in a computer-readable recording medium such as a Compact Disk Read Only Memory (CD-ROM), a flexible disk (FD), a Compact Disk Recordable (CD-R), or a Digital Versatile Disc (DVD) as a file in an installable form or an executable form and is provided as a computer program product.

In addition, the program executed by the text processing apparatus according to this embodiment may be configured to be stored in a computer connected to a network such as the Internet and be provided by being downloaded through the network. Furthermore, the program executed by the text processing apparatus of this embodiment may be configured to be provided or distributed through a network such as the Internet.

In addition, the program executed by the text processing apparatus according to this embodiment may be configured to be provided with being built in the ROM 52 or the like in advance.

The program executed by the text processing apparatus according to this embodiment has a module configuration that includes each processing unit (the topic structure model generator 10, the topic outliner 20 (the initial state generator 21, the topic structure operating unit 22, and the summary requesting unit 23), and the interactive summarizing unit 30 (the application range adjusting unit 31 and the important sentence selector 32)) of the text processing apparatus. As actual hardware, for example, a CPU 51 (processor) reads the program from the recording medium and executes the read program, whereby each processing unit described above is loaded into a RAM 53 (main memory), and each processing unit described above is generated on the RAM 53 (main memory). In addition, in the text processing apparatus according to this embodiment, some or all the processing units described above may be realized by using dedicated hardware such as an Application Specific Integrated Circuit (ASIC) or an Field-Programmable Gate Array (FPGA).

While certain embodiments have been described, the embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirits of the inventions.

**Claims**

1. A text processing apparatus comprising:

    a generator configured to generate topic structure information by analyzing input text, the topic structure information including information that represents a subordinate relation between topics included in the text and information that represents a relative positional relation between the topics included in the text; and
    a list display unit configured to display, on a display, a topic structure list in which a plurality of nodes each corresponding to a topic included in the text and each including a label that represents a subordinate relation between a topic corresponding to each node and another topic are arranged based on the topic structure information in accordance with a relative positional relation between topics corresponding to the respective nodes.

2. The apparatus according to claim 1, wherein each node included in the topic structure list, in a case where a topic corresponding to the node is a topic that is subordinate to another topic, includes the label that represents a subordinate relation between the topic corresponding to the node and the another topic by arranging a topic name representing the topic corresponding to the node and a topic name representing another topic to which the topic corresponding to the node is subordinate, with a predetermined symbol being interposed therebetween.

3. The apparatus according to claim 1 or 2, wherein
the list display unit is configured to, in a case where a first operation is performed for a node that is a node within the topic structure list displayed on the display and is a node corresponding to the topic to which another topic is subordinate as a target, display on the display a new topic structure list from which the node that is the target for the first operation is deleted and to which all the nodes corresponding to all the other topics that are subordinate to the topic corresponding to the node that is the target for the first operation are added.

4. The apparatus according to one of claims 1 to 3, wherein
the list display unit is configured to, in a case where a second operation is performed for a node that is a node within the topic structure list displayed on the display and is a node corresponding to a topic that is subordinate to another topic as a target, display on the display a new topic structure list from which all the nodes that include the node that is the target for the second operation and correspond to all the topics subordinate to another topic to which the node that is the target for the second operation is subordinate are deleted and to which a node corresponding to another topic to which the node that is the target for the second operation is added.

5. The apparatus according to one of claims 1 to 4, wherein
the generator is configured to, when two topics included in the text are set as topic A and topic B, detect a text unit in which a description relating to the topic A appears first in the text with a predetermined text unit in the text as a processing unit, and
the generator is configured to, in a case where a description relating to the topic B is present near front side than the description relating to the topic A in the detected text unit, determine that the topic A is a topic that is subordinate to the topic B.

6. The apparatus according to one of claims 1 to 5, wherein the generator is configured to, when two topics included in the text are set as topic A and topic B, determine a relative positional relation between the topic A and the topic B by comparing a position at which a description relating to the topic A first appears in the text with a position at which a description relating to topic B first appears in the text.

7. The apparatus according to one of claims 1 to 6, wherein
the generator is configured to, for each of a plurality of topics included in the text, detect a topic distribution range that is a range from a position at which a description relating to the topic first appears to a position at which a description relating to the topic finally appears in the text, and
the topic structure information further includes information that represents the topic distribution range of each of the plurality of topics included in the text.

8. The apparatus according to claim 7, wherein the generator is configured to divide the topic of which the size of the topic distribution range exceeds a predetermined upper limit into a plurality of topics each having the topic distribution range of which the size is the upper limit or less.

9. The apparatus according to claim 7 or 8, wherein the generator is configured to divide the topic including a blank in which sentences of a predetermined number or more not including a description relating to the topic are continued within the topic distribution range into a topic having the topic distribution range disposed near the front side than the blank and a topic having the topic distribution range disposed near the rear side than the blank.

10. The apparatus according to one of claims 7 to 9, further comprising a summary display unit configured to, in a case where a third operation is performed for an arbitrary node within the topic structure list displayed on the display as a target, summarize the text with the topic distribution range of a topic corresponding to the node that is the target for the third operation as a summary target, and further display a summary text that is a result of the summarizing on the display.

11. The apparatus according to claim 10, wherein the summary display unit is configured to, in a case where a fourth operation designating an arbitrary position within the summary text displayed on the display and a summarizing rate is performed, summarize the text at the designated summarizing rate with a synthesis range acquired by synthesizing the topic distribution ranges of all the topics including the designated position in the topic distribution range or a selection range selected from among the topic distribution ranges of all the topics including the designated position in the topic distribution ranges in accordance with a predetermined rule set as a new summary target, and update the summary text to be displayed on the display.

12. The apparatus according to claim 10 or 11, wherein the summary display unit is configured to, with a predetermined text unit in the text set as a processing unit, for each text unit included in the summary target within the text, summarize the text by detecting all the descriptions relating to the topic included in the text, determining a degree of importance of the text unit in accordance with a degree of importance of each topic corresponding to the detected description, and selecting the text unit to be deleted or added from among the text units included in the summary target in accordance with the degree of importance in the determined text unit.

13. The apparatus according to claim 12, wherein the degree of importance of the topic becomes higher as the number of other topics that are subordinate to the topic increases.

14. A text processing method performed in a text processing apparatus, the method comprising:

generating topic structure information by analyzing input text, the topic structure information including information that represents a subordinate relation between topics included in the text and information that represents a relative positional relation between the topics included in the text; and
displaying, on a display, a topic structure list in which a plurality of nodes each corresponding to a topic included in the text and each including a label that represents a subordinate relation between a topic corresponding to each node and another topic are arranged based on the topic structure information in accordance with a relative positional relation between topics corresponding to the respective nodes.

15. A computer program product comprising a computer-readable medium containing a program executed by a computer, the program causing the computer to execute:

generating topic structure information by analyzing input text, the topic structure information including information that represents a subordinate relation between topics included in the text and information that represents a relative positional relation between the topics included in the text; and
displaying, on a display, a topic structure list in which a plurality of nodes each corresponding to a topic included in the text and each including a label that represents a subordinate relation between a topic corresponding to each node and another topic are arranged based on the topic structure information in accordance with a relative positional relation between topics corresponding to the respective nodes.

# FIG.1

(a)

[POWDERED MILK/BREAST MILK]
[POWDERED MILK/REGULAR MILK]
[POWDERED MILK/PEPTIDE MILK/COMPOSITION]
[POWDERED MILK/PEPTIDE MILK/LOW ALLERGY]
[ELDER BROTHER]
[POWDERED MILK/PEPTIDE MILK/TASTE]
[POWDERED MILK/PEPTIDE MILK/PRICE]
[POWDERED MILK/PEPTIDE MILK/AMOUNT]
[ALLERGY]
[POWDERED MILK/PEPTIDE MILK/PROTEIN]
[FREE SAMPLE]

A: AS BABY'S ALLERGY, THERE IS MILK ALLERGY.
A: ALTHOUGH NOT FOR ALL BABIES, THIS ALLERGY OCCURS IN A CASE WHERE BABY'S INTESTINAL FUNCTION IS IMMATURE. WHEN LARGE UNDIGESTED PROTEIN ENTERS INTO BOWEL AND IS DIRECTLY ABSORBED AT PERIOD IN WHICH INTESTINAL FUNCTION IS IMMATURE, ANTIBODY IS PRODUCED INSIDE BODY SO AS TO CAUSE MILK ALLERGY.
A: IN CASE OF PEPTIDE MILK, PROTEIN IS FORMED TO BE SMALL IN ADVANCE TO A LEVEL THAT CAN BE EASILY SUPPLIED TO BODY, AND THUS, IT IS DIFFICULT TO CAUSE MILK ALLERGY.
B: THEN, IN CASE WHERE NUTRITION IS TAKEN USING PROTEIN THAT IS FORMED TO BE SMALL IN ADVANCE, WON'T IT DELAY DEVELOPMENT OF DIGESTIVE TRACT?
A: FOR THAT MATTER, OUR COMPANY HAS TESTED AND CHECKED THAT THERE IS NO PROBLEM.
A: ACTUALLY, BY COMPARING BABIES DRINKING PEPTIDE MILK AND BABIES DRINKING REGULAR MILK WITH EACH OTHER, STATUS OF GROWING AND PROGRESS OF BABY FOOD ARE VERIFIED.

(b)

[POWDERED MILK/PEPTIDE MILK/PRICE]
[POWDERED MILK/PEPTIDE MILK/AMOUNT]
[ALLERGY]
A: AS BABY'S ALLERGY, THERE IS MILK ALLERGY.
A: ALTHOUGH NOT FOR ALL BABIES, THIS ALLERGY OCCURS IN A CASE WHERE BABY'S INTESTINAL FUNCTION IS IMMATURE. WHEN LARGE UNDIGESTED PROTEIN ENTERS INTO BOWEL AND IS DIRECTLY ABSORBED AT PERIOD IN WHICH INTESTINAL FUNCTION IS IMMATURE, ANTIBODY IS PRODUCED INSIDE BODY SO AS TO CAUSE MILK ALLERGY.
A: IN CASE OF PEPTIDE MILK, PROTEIN IS FORMED IN ADVANCE TO BE SMALL TO A LEVEL THAT CAN BE EASILY SUPPLIED TO BODY, AND THUS, IT IS DIFFICULT TO CAUSE MILK ALLERGY.
B: IF NUTRITION IS TAKEN USING PROTEIN THAT IS FORMED TO BE SMALL IN ADVANCE, WON'T IT DELAY DEVELOPMENT OF DIGESTIVE TRACT?
A: FOR THAT MATTER, OUR COMPANY HAS TESTED AND CHECKED THAT THERE IS NO PROBLEM.
A: BY ACTUALLY COMPARING BABIES DRINKING PEPTIDE MILK AND BABIES DRINKING REGULAR MILK WITH EACH OTHER, STATUS OF GROWING AND PROGRESS OF BABY FOOD ARE VERIFIED.
[POWDERED MILK/PEPTIDE MILK/PROTEIN]
[FREE SAMPLE]

EP 2 869 219 A1

# FIG.2A

1 A SORRY FOR WAITING. THANK YOU FOR CALLING. THIS IS HAYASAKA.

2 B I'M CONSIDERING TO FEED BABY WITH POWDERED MILK, AND I CALLED YOU FOR SOME QUESTIONS.

3 B IS MILK BETTER THAN BREAST MILK?

4 A YOU MEAN COMPARISON BETWEEN MILK AND BREAST MILK, DON'T YOU? WHEN MILK IS COMPARED WITH BREAST MILK, BREAST MILK IS BETTER FOR BABY SO FIRST PLEASE FEED WITH BREAST MILK.

5 A IDEALLY, MILK IS FED WHEN BREAST MILK IS INSUFFICIENT.

6 B MY BABY IS NOW THREE WEEKS OLD, AND WHICH ONE OF YOUR POWDERED MILK DO YOU RECOMMEND?

7 A AS POWDERED MILK OF OUR COMPANY FOR THIRD WEEK AFTER BIRTH BABY, THERE ARE REGULAR MILK AND PEPTIDE MILK, AND GENERALLY, REGULAR MILK IS GOOD.

8 B WHAT IS DIFFERENCE BETWEEN TWO KINDS OF MILK? IS THERE ANY DIFFERENCE IN NUTRITION?

9 A YOU MEAN DIFFERENCE BETWEEN REGULAR MILK AND PEPTIDE MILK, DON'T YOU? WHILE THERE IS NO DIFFERENCE IN NUTRIENTS, PEPTIDE MILK HAS LOW-ALLERGY PROPERTY. DO YOU HAVE ELDER CHILD?

10 B I HAVE THREE-YEAR-OLD BOY. AS HE IS MISCHIEVOUS, I'M WORRIED WHETHER I CAN RAISE THEM TOGETHER.

11 A YOU HAVE ELDER SON. THAT SOUNDS PRETTY TOUGH. I HOPE YOU ENJOY THE SITUATION WITHOUT CONSIDERING IT TOO HEAVY. DOES ELDER BROTHER HAVE ALLERGY?

12 B WHEN NUT-BASED FOOD IS FED, RASHES APPEAR ON HIS SKIN.

13 A IT SEEMS THAT YOUR OLDER SON HAS FOOD ALLERGY. SINCE PEPTIDE MILK OF OUR COMPANY IS PRODUCT CONSIDERING FOOD ALLERGY, IF OLDER BOY HAS FOOD ALLERGY, AS THERE IS HIGH POSSIBILITY THAT HIS BROTHER ALSO HAS ALLERGY, I RECOMMENDED YOU TO USE PEPTIDE MILK.

14 B THEN, IS PEPTIDE MILK GOOD FOR HIM?

15 A YES, I RECOMMEND PEPTIDE MILK.

16 B IS THERE ANY DIFFERENCE IN TASTE?

17 A WHILE THERE IS NO BIG DIFFERENCE IN TASTE, SOME BABIES MIGHT CARE THE DIFFERENCE. IT WOULD BE BETTER TO CHOOSE ONE KIND.

18 B WHAT ABOUT THE PRICE?

19 A THE PRICES ARE SAME, BUT THERE IS DIFFERENCE IN AMOUNT OF CONTENT. IN CASE OF LARGE CAN, AMOUNT OF CONTENT IS 850 g IN REGULAR MILD, AND IS 800 g IN PEPTIDE MILK.

20 B THAT'S WHAT I THOUGHT. PEPTIDE MILK IS MORE EXPENSIVE.

21 A I APOLOGIZE FOR THAT. SINCE THERE IS DIFFERENCE IN FUNCTIONALITY, UNIT PRICE OF PEPTIDE MILK IS SLIGHTLY HIGHER.

22 B WELL, NOW THAT I THINK ABOUT IT, ABOUT 50 g DIFFERENCE DOES NOT MATTER.

EP 2 869 219 A1

# FIG.2B

23 B THEN, WHILE YOU ARE SAYING THAT THERE IS NO DIFFERENCE IN COMPOSITION, WHY DOES PEPTIDE MILK HAVE LOW-ALLERGY PROPERTY?

24 A THERE IS DIFFERENCE IN COMPOSITIONS, BUT I MENTIONED THAT THERE IS NO DIFFERENT IN NUTRIENT.

25 B HOW THERE IS NO DIFFERENCE IN NUTRIENT WHILE THERE IS DIFFERENCE IN COMPOSITION?

26 A AS BABY'S ALLERGY, THERE IS MILK ALLERGY.

27 B HMM

28 A ALTHOUGH NOT FOR ALL BABIES, THIS ALLERGY OCCURS IN A CASE WHERE BABY'S INTESTINAL FUNCTION IS IMMATURE. WHEN LARGE UNDIGESTED PROTEIN ENTER INTO BOWEL AND IS DIRECTLY ABSORBED AT PERIOD IN WHICH INTESTINAL FUNCTION IS IMMATURE, ANTIBODY IS PRODUCED INSIDE BODY SO AS TO CAUSE MILK ALLERGY.

29 B IS THAT SO?

30 A IN CASE OF PEPTIDE MILK, PROTEIN IS FORMED TO BE SMALL TO A LEVEL THAT CAN BE EASILY PENETRATED INTO BODY, AND THUS, IT IS DIFFICULT TO CAUSE MILK ALLERGY

31 B NOW, I UNDERSTAND THAT.

32 B THEN, IF NUTRITION IS TAKEN USING PROTEIN THAT IS FORMED TO BE SMALL IN ADVANCE, WON'T IT DELAY DEVELOPMENT OF DIGESTIVE TRACT?

33 A FOR THAT MATTER, OUR COMPANY HAS TESTED AND CHECKED THAT THERE IS NO PROBLEM.

34 B WHAT KIND OF TEST HAS BEEN MADE?

35 A BY ACTUALLY COMPARING BABIES DRINKING PEPTIDE MILK AND BABIES DRINKING REGULAR MILK WITH EACH OTHER, AND STATUS OF GROWING AND PROGRESS OF BABY FOOD ARE VERIFIED.

36 B IT SEEMS THAT THERE IS NO PROBLEM. OK. I'LL TAKE PEPTIDE MILK.

37 A THANK YOU. DO YOU MIND IF WE SEND SAMPLES OF REGULAR MILK AND PEPTIDE MILK?

38 B OH? WOULD YOU DO THAT? THEN, PLEASE SEND THEM.

39 A MAY I HAVE YOUR NAME AND ADDRESS?

40 B ADDRESS IS 1-1 CHIYODA, CHIYODA-KU, TOKYO FOR AMATERASU OOMIKAMI.

41 A LET ME CHECK. ADDRESS IS 1-1 CHIYODA, CHIYODA-KU, TOKYO FOR AMATERASU OOMIKAMI, IS THAT RIGHT?

42 B YES, THAT'S RIGHT.

43 A THANK YOU. I'LL SEND SAMPLES OF REGULAR MILK AND PEPTIDE MILK.

44 A THIS IS HAYASAKA AND I TOOK CARE OF YOUR CALL. THANK YOU FOR CALLING.

EP 2 869 219 A1

# FIG.3

TEXT ⌐T

TOPIC STRUCTURE MODEL GENERATOR ⌐10

TOPIC STRUCTURE MODEL ⌐M

TOPIC DICTIONARY ⌐15

TOPIC OUTLINER ⌐20

INITIAL STATE GENERATOR ⌐21

TOPIC STRUCTURE OPERATING UNIT ⌐22

SUMMARY REQUESTING UNIT ⌐23

SUMMARY APPLICATION RANGE ⌐R

INTERACTIVE SUMMARIZING UNIT ⌐30

APPLICATION RANGE ADJUSTING UNIT ⌐31

IMPORTANT SENTENCE SELECTOR ⌐32

SUMMARY TEXT ⌐T_a

MOUSE WHEEL OPERATION ⌐op1

"+"/"−" BUTTON OPERATION ⌐op2

EP 2 869 219 A1

# FIG.4

TOPIC SUBORDINATE RELATION MODEL

POWDERED MILK [2:43] → [2:7]
- BREAST MILK [4:5] [4:5]
- REGULAR MILK [7:43] [7:43]
- PEPTIDE MILK [7:43] [7:43]

PEPTIDE MILK branches to:
- LOW ALLERGEN [9:23] [9:23]
- TASTE [16:17] [16:17]
- PRICE [18:21] [18:21]
- AMOUNT [19:21] [19:21]
- COMPOSITION [23:25] [23:25]
- PROTEIN [28:35] [28:35]

ELDER BROTHER [9:13] → [9:13]
- FOOD ALLERGY [12:13] [12:13]

ALLERGY [26:30] → [26:30]
- MILK ALLERGY [26:30] [26:30]

FREE SAMPLE [37:43] → [37:43]
- ADDRESS [39:41] [39:41]

PROTEIN [28:35] → DELAY OF DEVELOPMENT [32:35] [32:35] → TEST [33:35] [33:35]
- DEVELOPMENT [35:35] [35:35]
- BABY FOOD [35:35] [35:35]

TOPIC CONTEXT MODEL

POWDERED MILK [2:43] | BREAST MILK [4:5] | REGULAR MILK [7:43] | PEPTIDE MILK [7:43] | LOW ALLERGEN [9:23] | ELDER BROTHER [9:13] | FOOD ALLERGY [12:13] ...

M
M1
M2

EP 2 869 219 A1

# FIG.5

START

ACQUIRE CO-REFERENCE CLUSTER GROUP BY PERFORMING CO-REFERENCE ANALYSIS FOR INPUT TEXT — S101

SELECT TOPIC NAME FROM AMONG TOPIC WORDS OF EACH TOPIC — S102

CALCULATE WEIGHTING FACTOR OF EACH TOPIC, DISCARD TOPICS OF WHICH WEIGHTING FACTORS ARE BELOW THRESHOLD, AND REGISTER PAIR OF TOPIC NAME AND TOPIC WORD GROUP OF REMAINING TOPIC IN TOPIC DICTIONARY — S103

EXTRACT ONE TOPIC WORD REGISTERED IN TOPIC DICTIONARY IN ORDER FROM START OF INPUT TEXT — S104

IS TOPIC X TO WHICH EXTRACTED TOPIC WORD BELONGS IS TOPIC THAT IS NOT APPEARED UNTIL NOW? — S105

NO

YES

ACQUIRE TOPIC NAME AND TOPIC DISTRIBUTION RANGE OF TOPIC X AND ADD THEM TO END OF LIST AS NODE OF TOPIC CONTEXT MODEL — S106

IS ANOTHER TOPIC WORD PRESENT ON FRONT SIDE OF SENTENCE IN WHICH EXTRACTED TOPIC WORD APPEARS? — S107

NO

ACQUIRE TOPIC NAME AND TOPIC DISTRIBUTION RANGE OF TOPIC X AND ADD THEM TO TOPIC SUBORDINATE RELATION MODEL AS INDEPENDENT ROOT NODE THAT IS NOT SUBORDINATE TO OTHER NODE — S108

YES

ARE TOPIC X AND TOPIC Y IN PARALLEL RELATION? — S109

YES

ACQUIRE TOPIC NAME AND TOPIC DISTRIBUTION RANGE OF TOPIC X AND ADD THEM TO TOPIC SUBORDINATE RELATION MODEL AS CHILD NODE THAT IS SUBORDINATE TO PARENT NODE TO WHICH NODE OF TOPIC Y IS SUBORDINATE — S111

NO

ACQUIRE TOPIC NAME AND TOPIC DISTRIBUTION RANGE OF TOPIC X AND ADD THEM TO TOPIC SUBORDINATE RELATION MODEL AS CHILD NODE THAT IS SUBORDINATE TO NODE OF TOPIC Y — S110

ARE ALL TOPIC WORDS REGISTERED IN TOPIC DICTIONARY EXTRACTED? — S112

NO

YES

END

# FIG.6

```
                                    ⌐101

    ┌──────────────────────────────┐
    │                              │
    │                              │
    │  [POWDERED MILK]             │
    │  [ELDER BROTHER]             │
    │  [ALLERGY]                   │
    │  [FREE SAMPLE]               │
    │                              │
    │                              │
    └──────────────────────────────┘
```

# FIG.7

```
                ┌─────────────┐
                │    START    │
                └─────────────┘
                       │
                       ▼
    ┌─────────────────────────────────────┐
    │  ACQUIRE TOPIC NAMES OF TOPICS OF    │
    │  ALL ROOT NODES INCLUDED IN TOPIC    │ ～S201
    │  SUBORDINATE RELATION MODEL          │
    └─────────────────────────────────────┘
                       │
                       ▼
    ┌─────────────────────────────────────┐
    │  REARRANGE ACQUIRED TOPIC NAMES      │
    │  IN ACCORDANCE WITH CONTEXT          │ ～S202
    │  BETWEEN TOPICS                      │
    └─────────────────────────────────────┘
                       │
                       ▼
    ┌─────────────────────────────────────┐
    │  DISPLAY TOPIC STRUCTURE LIST IN     │
    │  WHICH GUI NODES HAVING ACQUIRED     │
    │  TOPIC NAMES AS LABELS ARE           │ ～S203
    │  ARRANGED IN REARRANGED ORDER        │
    │  ON OUTLINER WINDOW                  │
    └─────────────────────────────────────┘
                       │
                       ▼
                ┌─────────────┐
                │     END     │
                └─────────────┘
```

# FIG.8

START

RECEIVE USER OPERATION OPENING ARBITRARY GUI NODE — S301

IS CHILD TOPIC THAT IS SUBORDINATE TO TOPIC REPRESENTED BY OPERATED GUI NODE PRESENT? — S302

NO

YES

DELETE OPERATED GUI NODE FROM TOPIC STRUCTURE LIST — S303

ADD GUI NODES OF ALL CHILD TOPICS THAT ARE SUBORDINATE TO TOPIC REPRESENTED BY OPERATED GUI NODE TO TOPIC STRUCTURE LIST — S304

REARRANGE ALL GUI NODES INCLUDED IN TOPIC STRUCTURE LIST IN ACCORDANCE WITH CONTEXT BETWEEN TOPICS AND REDISPLAY REARRANGE GUI NODES ON OUTLINER WINDOW — S305

END

# FIG.9

```
        ┌─────────────┐
        │    START    │
        └─────────────┘
               │
               ▼
┌────────────────────────────────┐
│  RECEIVE USER OPERATION OPENING │───S401
│       ARBITRARY GUI NODE        │
└────────────────────────────────┘
               │
               ▼
┌────────────────────────────────┐
│   ADD GUI NODE OF PARENT TOPIC OF │
│  TOPIC REPRESENTED BY OPERATED   │───S402
│  GUI NODE TO TOPIC STRUCTURE LIST│
└────────────────────────────────┘
               │
               ▼
┌────────────────────────────────┐
│   DELETE OPERATED GUI NODE AND   │
│    ALL GUI NODES REPRESENTING    │
│      BROTHER TOPIC OF TOPIC      │───S403
│  REPRESENTED BY GUI NODE FROM    │
│      TOPIC STRUCTURE LIST        │
└────────────────────────────────┘
               │
               ▼
┌────────────────────────────────┐
│    REARRANGE ALL GUI NODES       │
│  INCLUDED IN TOPIC STRUCTURE LIST│
│   IN ACCORDANCE WITH CONTEXT     │───S404
│  BETWEEN TOPICS AND REDISPLAY    │
│    REARRANGED GUI NODES ON       │
│       OUTLINER WINDOW            │
└────────────────────────────────┘
               │
               ▼
        ┌─────────────┐
        │     END     │
        └─────────────┘
```

# FIG.10

(a)

[POWDERED
MILK]
[ELDER
BROTHER]
[ALLERGY]
[FREE SAMPLE]

101

CLICK ON
[POWDERED
MILK]

CLICK ON
"POWDERED
MILK" OF
[POWDERED
MILK/PEPTIDE
MILK]

(b)

[POWDERED MILK/BREAST
MILK]
[POWDERED MILK/REGULAR
MILK]
[POWDERED MILK/PEPTIDE
MILK]
[ELDER BROTHER]
[ALLERGY]
[FREE SAMPLE]

101

CLICK ON
"PEPTIDE MILK" OF
[POWDERED MILK/
PEPTIDE MILK]

CLICK ON
"PEPTIDE MILK" OF
[POWDERED MILK/
PEPTIDE MILK/
TASTE]

(c)

[POWDERED MILK/BREAST MILK]
[POWDERED MILK/REGULAR MILK]
[POWDERED MILK/PEPTIDE MILK/LOW
ALLERGEN]
[ELDER BROTHER]
[POWDERED MILK/PEPTIDE MILK/TASTE]
[POWDERED MILK/PEPTIDE MILK/PRICE]
[POWDERED MILK/PEPTIDE MILK/AMOUNT]
[POWDERED MILK/PEPTIDE MILK/
COMPOSITION]
[ALLERGY]
[POWDERED MILK/PEPTIDE MILK/PROTEIN]
[FREE SAMPLE]

101

EP 2 869 219 A1

# FIG.11

START

RECEIVE USER OPERATION GIVING
INSTRUCTION FOR SUMMARIZING
TEXT RELATING TO SPECIFIC TOPIC — S501

DESIGNATE TOPIC DISTRIBUTION
RANGE OF DESIGNATED TOPIC AS
SUMMARY APPLICATION RANGE AND
REQUEST SUMMARY OF TEXT — S502

END

# FIG.12

CLICK→ISSUE SENTENCE ADDING COMMAND OF GLOBAL MODE

102   103 104

A AS BABY'S ALLERGY, THERE IS MILK ALLERGY.
B HMM
A ALTHOUGH NOT FOR ALL BABIES, THIS ALLERGY OCCURS IN A CASE WHERE
   BABY'S INTESTINAL FUNCTION IS IMMATURE. WHEN LARGE UNDIGESTED PROTEIN ENTERS
   INTO BOWEL AND IS DIRECTLY ABSORBED AT PERIOD IN WHICH INTESTINAL FUNCTION
   IS IMMATURE, ANTIBODY IS PRODUCED INSIDE BODY SO AS TO CAUSE MILK ALLERGY.
B IS THAT SO?
A IN CASE OF PEPTIDE MILK, PROTEIN IS FORMED TO BE SMALL IN ADVANCE TO A LEVEL THAT
   CAN BE EASILY SUPPLIED TO BODY, AND THUS, IT IS DIFFICULT TO CAUSE MILK ALLERGY
B NOW, I UNDERSTAND THAT.
B THEN, IN CASE WHERE NUTRITION IS TAKEN USING PROTEIN THAT IS FORMED TO BE SMALL
   IN ADVANCE, WON'T IT DELAY DEVELOPMENT OF DIGESTIVE TRACT?
A FOR THAT MATTER, OUR COMPANY HAS TESTED AND CHECKED THAT THERE IS NO PROBLEM.
B WHAT KIND OF TEST HAS BEEN MADE?
A ACTUALLY, BY COMPARING BABIES DRINKING PEPTIDE MILK AND BABIES DRINKING
   REGULAR MILK WITH EACH OTHER, AND STATUS OF DEVELOPMENT AND PROGRESS STATE
   OF BABY FOOD ARE VERIFIED.

CLICK→ISSUE SENTENCE DELETING COMMAND OF GLOBAL MODE

OPERATION OF UPWARD MOUSE WHEEL
→ISSUE SENTENCE ADDING COMMAND OF LOCAL MODE

OPERATION OF DOWNWARD MOUSE WHEEL
→ISSUE SENTENCE DELETING COMMAND OF LOCAL MODE

EP 2 869 219 A1

# FIG.13

START

LIST UP ALL TOPICS OF WHICH TOPIC DISTRIBUTION RANGES INCLUDE POSITION AT WHICH MOUSE CURSOR IS PLACED ON BODY WINDOW — S601

SEQUENTIALLY EXTRACT ONE OF LISTED-UP TOPICS — S602

COUNT TOPIC DENSITY — S603

S604
IS COUNTING OF TOPIC DENSITY COMPLETED FOR ALL LISTED-UP TOPICS? — NO

YES

SELECT TOPIC OF WHICH TOPIC DENSITY IS MAXIMUM AND SET TOPIC DISTRIBUTION RANGE OF TOPIC AS SUMMARY APPLICATION RANGE — S605

END

# FIG.14

START

LIST UP ALL TOPICS OF WHICH TOPIC DISTRIBUTION RANGES INCLUDE POSITION AT WHICH MOUSE CURSOR IS PLACED ON BODY WINDOW ～S701

SEQUENTIALLY EXTRACT ONE OF LISTED-UP TOPICS ～S702

COUNT TOPIC DENSITY ～S703

IS COUNTING OF TOPIC DENSITY COMPLETED FOR ALL LISTED-UP TOPICS? ～S704

NO

YES

PERFORM WEIGHTED SYNTHESIS OF TOPIC DISTRIBUTION RANGES OF LISTED-UP TOPICS USING TOPIC DENSITY OF EACH TOPIC SO AS TO ACQUIRE SYNTHESIS RANGE AND SET ACQUIRED SYNTHESIS RANGE AS SUMMARY APPLICATION RANGE ～S705

END

# FIG.15

```
                    ┌─────────────┐
                    │    START    │
                    └──────┬──────┘
                           │
                           ▼
         ┌──────────────────────────────────┐
         │  DETERMINE SUMMARY APPLICATION    │──── S801
         │              RANGE                │
         └──────────────────┬───────────────┘
                            │
                            ▼
         ┌──────────────────────────────────┐
         │     DETERMINE TARGET SIZE OF      │──── S802
         │          SUMMARY TEXT            │
         └──────────────────┬───────────────┘
                            │
                            ▼
         ┌──────────────────────────────────┐
         │  REMOVE SENTENCE HAVING LOWEST    │
         │  SCORE AMONG SENTENCES INCLUDED   │──── S803
         │  IN SUMMARY APPLICATION RANGE     │
         └──────────────────┬───────────────┘
                            │
                            ▼
                    ╱─────────────╲      S804
                   ╱  DOES SIZE OF  ╲
                  ╱  ALL SENTENCES   ╲    NO
                 ╱  THAT REMAIN FIT   ╲───────┐
                 ╲   INTO TARGET SIZE?╱       │
                  ╲                  ╱        │
                   ╲────────┬───────╱         │
                            │ YES             │
                            ▼                 │
         ┌──────────────────────────────────┐│
         │  UPDATE DISPLAY OF BODY WINDOW    ││
         │  SUCH THAT ALL SENTENCES THAT     │──── S805
         │  REMAIN ARE SET AS NEW SUMMARY    ││
         │            TEXT                   ││
         └──────────────────┬───────────────┘│
                            │
                            ▼
                    ┌─────────────┐
                    │     END     │
                    └─────────────┘
```

# FIG.16

```
                    START

    DETERMINE SUMMARY APPLICATION      S901
              RANGE

      DETERMINE TARGET SIZE OF         S902
           SUMMARY TEXT

     ADD SENTENCE HAVING HIGHEST
     SCORE FROM AMONG SENTENCES
     THAT ARE INCLUDED IN SUMMARY
   APPLICATION RANGE AND IS REMOVED    S903
   BY SENTENCE DELETING PROCESS TO
           ORIGINAL POSITION

                                       S904
              DOES SIZE OF
             ALL SENTENCES
          INCLUDING SENTENCE THAT       NO
           IS ADDED FIT INTO
              TARGET SIZE?

                   YES

     UPDATE DISPLAY OF BODY WINDOW
        WHILE ALL SENTENCES            S905
       INCLUDING ADDED SENTENCE
     ARE SET AS NEW SUMMARY TEXT

                    END
```

# FIG.17

```
        START

LIST UP ALL TOPIC WORDS INCLUDED
  IN SENTENCE THAT IS TARGET          S1001
    FOR CALCULATING SCORE

  SEQUENTIALLY EXTRACT ONE OF
     LISTED-UP TOPIC WORDS            S1002

  SPECIFY TOPIC TO WHICH TOPIC
WORD THAT IS EXTRACTED BELONGS        S1003
   BY USING TOPIC DICTIONARY

  CALCULATE SUM OF DEGREES OF
IMPORTANCE OF SPECIFIED TOPIC         S1004
   AND CHILD TOPICS THEREOF

  ADD ACQUIRED SUM VALUE OF
 DEGREES OF IMPORTANCE TO             S1005
     SCORE OF SENTENCE

              S1006
        IS PROCESS
       PERFORMED FOR              NO
        ALL LISTED-UP
       TOPIC WORDS?

          YES

          END
```

# FIG.18

FROM S101
ILLUSTRATED IN FIG.5

SEQUENTIALLY EXTRACT
ONE CO-REFERENCE CLUSTER — S1101

GENERATE HISTOGRAM IN WHICH MEMBER
OF CO-REFERENCE CLUSTER APPEARS — S1102

S1103

IS THERE BLANK
PORTION IN WHICH
SENTENCES, WHICH HAVE
AN APPEARANCE FREQUENCY OF "0",
OF A PREDETERMINED
NUMBER OR MORE ARE
CONTINUED?

NO

YES

DIVIDE CO-REFERENCE CLUSTER INTO
CO-REFERENCE CLUSTER THAT IS
CONFIGURED BY MEMBERS APPEARING
BEFORE BLANK PORTION AND
CO-REFERENCE CLUSTER THAT IS
CONFIGURED BY MEMBERS APPEARING
AFTER BLANK PORTION — S1104

S1105

DOES NUMBER OF
MEMBERS OF CO-REFERENCE
CLUSTER EXCEED
PREDETERMINED
NUMBER?

NO

YES

DIVIDE CO-REFERENCE CLUSTER ALONG
APPEARANCE POSITIONS OF MEMBERS
SUCH THAT THE NUMBER OF MEMBERS OF
DIVIDED CO-REFERENCE CLUSTER IS A
PREDETERMINED NUMBER OR LESS — S1106

S1107

NO

IS PROCESS
PERFORMED FOR ALL
CO-REFERENCE
CLUSTERS?

YES

TO S102
ILLUSTRATED IN FIG. 5

# FIG.19

Europäisches
Patentamt

European
Patent Office

Office européen
des brevets

# EUROPEAN SEARCH REPORT

Application Number

EP 14 18 0982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 368 167 A (DVORAK RADKA RADANA [GB]) 24 April 2002 (2002-04-24) | 1,14,15 | INV.<br>G06F17/30<br>G06F17/22 |
| A | * page 5, line 18 - page 6, line 11; figures 2-5 *<br>* page 10, line 12 - page 13, line 4 * | 2-13 | |
| A | DAVIDE MAGATTI ET AL: "A Software System for Topic Extraction and Document Classification",<br>2009 IEEE/WIC/ACM INTERNATIONAL JOINT CONFERENCES ON WEB INTELLIGENCE (WI) AND INTELLIGENT AGENT TECHNOLOGIES (IAT) : WI-IAT 2009 ; MILANO, ITALY, 15 - 18 SEPTEMBER 2009, PISCATAWAY, NJ : IEEE, US, 15 September 2009 (2009-09-15), pages 283-286, XP058017817,<br>DOI: 10.1109/WI-IAT.2009.49<br>ISBN: 978-0-7695-3801-3<br>* See sections II - IV. * | 1-15 | |

TECHNICAL FIELDS
SEARCHED        (IPC)

G06F

The present search report has been drawn up for all claims

| Place of search | Date of completion of the search | Examiner |
|---|---|---|
| Berlin | 26 March 2015 | Bowler, Alyssa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 18 0982

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2015

| Patent document cited in search report | Publication date | Patent family member(s) | Publication date |
|---|---|---|---|
| GB 2368167 A | 24-04-2002 | NONE | |

EPO FORM P0459

For more details about this annex : see Official Journal of the European Patent Office, No. 12/82

**EP 2 869 219 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013227557 A

### Non-patent literature cited in the description

- **H. P. LUHN.** The automatic creation of literature abstracts. *IBM Journal of Research and Development,* 1958, vol. 2 (2), 159-165